# EUROPEAN PATENT APPLICATION

(11) **EP 4 506 638 A1**
(43) Date of publication of application: **12.02.2025**
(21) Application number: 22936524.2
(22) Date of filing: 07.04.2022
(51) Int. Cl.: F25B 1/00

(54) **REFRIGERATION CYCLE SYSTEM**

(71) Applicant: MITSUBISHI ELECTRIC CORPORATION, Chiyoda-ku Tokyo 100-8310 (JP)
(72) Inventor: MUKAITANI, Naoya, Tokyo 100-8310 (JP); HIKONE, Takahito, Tokyo 100-8310 (JP); AKAGI, Satoshi, Tokyo 100-8310 (JP); ITO, Takuya, Tokyo 100-8310 (JP); YAMANO, Yoshio, Tokyo 100-8310 (JP)
(74) Representative: Witte, Weller & Partner Patentanwälte mbB
(86) International application number: PCT/JP2022/017253
(87) International publication number: WO 2023/195125

(57) **Abstract**

A refrigeration cycle system includes a heat source apparatus and a controller. The heat source apparatus is configured to cool or heat a heat medium through refrigerant flowing through a refrigerant circuit and includes a heat medium heat exchanger, a flow rate acquisition device, and a compressor. The heat medium heat exchanger causes the heat medium and the refrigerant to exchange heat with each other. The flow rate acquisition device acquires flow rate information that is information regarding a flow rate of the heat medium that flows through the heat medium heat exchanger. The compressor compresses the refrigerant. The controller varies an operating capacity of the compressor and causes the compressor to operate at the operating capacity thus varied.

## Description

### Technical Field

The present disclosure relates to a refrigeration cycle system configured to regulate the temperature of a target through a heat medium having exchanged heat with refrigerant.

### Background Art

Conventionally, there has been known a refrigeration cycle system configured to regulate the temperature of a target such as indoor air through a heat medium such as water. As such a refrigeration cycle system, for example, Patent Literature 1 describes a chilling unit including a heat medium heat exchanger configured to cool or heat a heat medium that is supplied to a load side, a pump configured to send out the heat medium to the load side, and a controller configured to set at least either the upper-limit driving frequency or lower-limit driving frequency of the pump. In Patent Literature 1, the controller sets at least either the upper-limit driving frequency or lower-limit driving frequency of the pump based on at least either the upper-limit set flow rate or lower-limit set flow rate of the heat medium that passes through the heat medium heat exchanger. Further, the chilling unit varies the driving frequency of the pump according to a change in the flow rate of the heat medium that passes through the heat medium heat exchanger. In thus way, the chilling unit provides stabilization of the flow rate of the heat medium, thus providing stabilization of the temperature of the heat medium.

### Citation List

### Patent Literature

Patent Literature 1: International Publication No. 2020/148887

### Summary of Invention

### Technical Problem

However, the driving frequency of the pump cannot always vary quickly in accordance with a fluctuation in the flow rate of the heat medium that flows through the heat medium heat exchanger. Therefore, there has been a case in which the temperature of the heat medium that flows through the heat medium heat exchanger becomes unstable. Further, there has been a case in which greatly changing the driving frequency of the pump in accordance with the flow rate of the heat medium results in a destabilization of the flow rate of the heat medium, thus destabilizing the temperature of the heat medium that flows through the heat medium heat exchanger.

The present disclosure was made to solve the foregoing problem and has as an object to provide a refrigeration cycle system configured to improve the stability of the temperature of a heat medium that flows through a heat medium heat exchanger. Solution to Problem

A refrigeration cycle system according to an embodiment of the present disclosure includes a heat source apparatus and a controller configured to control the heat source apparatus. The heat source apparatus has a refrigerant circuit and is configured to cool or heat a heat medium through refrigerant flowing through the refrigerant circuit. The heat source apparatus includes a heat medium heat exchanger configured to cause the heat medium and the refrigerant to exchange heat with each other, a flow rate acquisition device configured to acquire flow rate information that is information regarding a flow rate of the heat medium that flows through the heat medium heat exchanger, and a compressor configured to compress the refrigerant. In a case in which the flow rate of the heat medium that flows through the heat medium heat exchanger varies during a first period of time determined in advance, the controller varies an operating capacity of the compressor and causes the compressor to operate at the operating capacity thus varied.

### Advantageous Effects of Invention

In the refrigeration cycle system according to the embodiment of the present disclosure, the controller varies the operating capacity of the compressor based on the flow rate information. Note here that the flow rate information is information regarding the flow rate of the heat medium that flows through the heat medium heat exchanger. This enables the controller to adjust, to the flow rate of the heat medium, the amount of the refrigerant that flows through the heat medium heat exchanger. Accordingly, the refrigeration cycle system can improve the stability of the temperature of the heat medium that flows through the heat medium heat exchanger.

### Brief Description of Drawings

[Fig. 1] Fig. 1 is a schematic view showing an example configuration of a refrigeration cycle system according to Embodiment 1.
[Fig. 2] Fig. 2 is a diagram showing a first example configuration of a heat source apparatus including a plurality of compressors in Embodiment 1.
[Fig. 3] Fig. 3 is a diagram showing a second example configuration of a heat source apparatus including a plurality of compressors in Embodiment 1.
[Fig. 4] Fig. 4 is a block diagram showing an example configuration of an integrated control device in Embodiment 1.
[Fig. 5] Fig. 5 is a diagram showing an example hardware configuration of the integrated control device in Embodiment 1.
[Fig. 6] Fig. 6 is a diagram showing an example hardware configuration of a heat source control device in Embodiment 1.
[Fig. 7] Fig. 7 is a flow chart illustrating a sequence of actions of a compressor control process by the refrigeration cycle system according to Embodiment 1.
[Fig. 8] Fig. 8 is a flow chart illustrating a sequence of actions of a compressor control process by a refrigeration cycle system according to Embodiment 2.
[Fig. 9] Fig. 9 is a flow chart illustrating a sequence of actions of a heat medium temperature stabilization process by a refrigeration cycle system according to Embodiment 3.
[Fig. 10] Fig. 10 is a flow chart illustrating a sequence of actions of a circulation device control process by a refrigeration cycle system according to Embodiment 4.
[Fig. 11] Fig. 11 is a schematic view showing an example configuration of a refrigeration cycle system according to Embodiment 5.
[Fig. 12] Fig. 12 is a flow chart illustrating a sequence of actions of a bypass valve control process by an integrated control device in Embodiment 5.
[Fig. 13] Fig. 13 is a schematic view showing an example configuration of a refrigeration cycle system in Embodiment 6.
[Fig. 14] Fig. 14 is a diagram illustrating a graph of differential pressure-flow rate information in Embodiment 6.
[Fig. 15] Fig. 15 is a schematic view showing an example configuration of a refrigeration cycle system in Embodiment 7.
[Fig. 16] Fig. 16 is a schematic view showing an example configuration of a refrigeration cycle system according to Embodiment 8.
[Fig. 17] Fig. 17 is a schematic view showing an example configuration of a refrigeration cycle system according to Embodiment 9.
[Fig. 18] Fig. 18 is a diagram showing a first example configuration of a heat source apparatus including a plurality of refrigerant circuits in Embodiment 9.
[Fig. 19] Fig. 19 is a diagram showing a second example configuration of a heat source apparatus including a plurality of refrigerant circuits in Embodiment 9. Description of Embodiments

In the following, refrigeration cycle systems according to embodiments are described in detail with reference to the drawings. In the following drawings, relationships in size between each constituent element and the other may be different from actual ones.

### Embodiment 1.

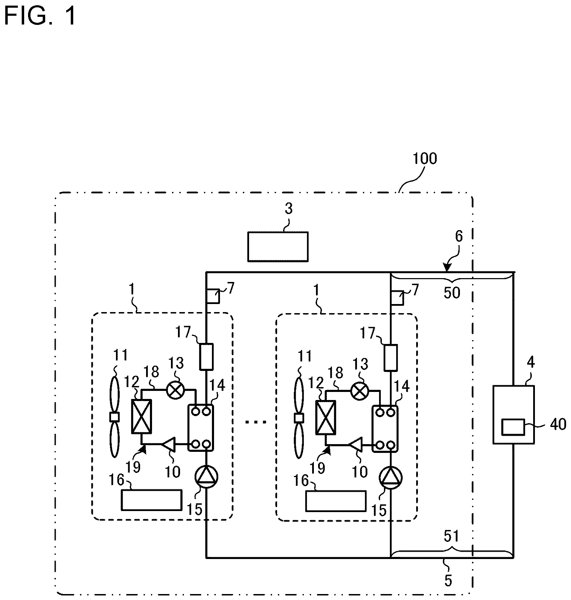

Fig. 1 is a schematic view showing an example configuration of a refrigeration cycle system according to Embodiment 1. The refrigeration cycle system 100 according to Embodiment 1 includes one or more heat source apparatuses 1 and an integrated control device 3. The one or more heat source apparatuses 1 are connected to a load system 4 by heat medium pipes 5 through which a heat medium flows. The one or more heat source apparatuses 1, the load system 4, and the heat medium pipes 5 form a heat medium circuit 6 through which the heat medium flows. The heat medium is liquid such as water or brine. In a case in which the refrigeration cycle system 100 includes a plurality of the heat source apparatuses 1, the plurality of heat source apparatuses 1 are connected in parallel to the load system 4 via the heat medium pipes 5.

The one or more heat source apparatuses 1 cool the heat medium and supply the heat medium thus cooled to the load system 4 via an outbound pipe 50. Note here that the outbound pipe 50 is one of the heat medium pipes 5 through which the heat medium flows from the one or more heat source apparatuses 1 to the load system 4. The integrated control device 3 controls the one or more heat source apparatuses 1.

The load system 4 cools a target such as air or water through the heat medium supplied from the one or more heat source apparatuses 1. It should be noted that the load system 4 includes one or more load apparatuses (not illustrated) configured to cool the target through the heat medium. The load apparatuses are apparatuses having heat exchangers. The heat medium having exchanged heat with the target in the load system 4 flows into the one or more heat source apparatuses 1 through a return pipe 51. Note here that the return pipe 51 is one of the heat medium pipes 5 through which the heat medium flows from the load system 4 to the one or more heat source apparatuses 1.

Each of the one or more heat source apparatuses 1 includes a compressor 10, an air-sending device 11, a heat exchanger 12, an expansion valve 13, a heat medium heat exchanger 14, a circulation device 15, and a heat source control device 16 inside a housing indicated by dashed lines in Fig. 1. Further, each of the one or more heat source apparatuses 1 includes a flowmeter 17. Although the flowmeter 17 is shown in a region surrounded by the dashed lines in Fig. 1, the flowmeter 17 may be included inside the housing, which forms an outer shell of the heat source apparatus 1, or may be placed outside the housing. A heat medium pipe 5 situated downstream of the heat medium heat exchanger 14 of each of the one or more heat source apparatuses 1 is provided with a temperature sensor 7 configured to measure the temperature of the heat medium. Although Fig. 1 shows an example in which the temperature sensor 7 is provided outside the housing, which forms the outer shell of the heat source apparatus 1, the temperature sensor 7 may be placed inside the housing. The compressor 10, the heat exchanger 12, the expansion valve 13, and the heat medium heat exchanger 14 are connected to one another in sequence by refrigerant pipes 18 to form a refrigerant circuit 19 through which refrigerant circulates. The heat medium heat exchanger 14 and the circulation device 15 are connected to each other by a heat medium pipe 5. Although Fig. 1 shows an example in which the circulation device 15 is provided inside the housing, which forms the outer shell of the heat source apparatus 1, the circulation device 15 may be placed outside the housing.

The compressor 10 suctions the refrigerant from the refrigerant pipes 18, compresses the refrigerant thus suctioned, and discharges the refrigerant thus compressed to the refrigerant pipes 18. The compressor 10 is an inverter compressor whose capacity can be controlled by an inverter. The capacity of the compressor 10 is the amount of the refrigerant that the compressor 10 discharges per unit time. The capacity of the compressor 10 can be varied by varying an operating frequency of the compressor 10 in accordance with an instruction from the heat source control device 16.

The air-sending device 11 includes a fan such as a propeller fan, a turbo fan, or a sirocco fan and a fan driving device such as a fan motor and guides outdoor air to the heat exchanger 12. The term "outdoor" here refers to a space other than the interior of a room in a case in which a target whose temperature is regulated by the load system 4 is indoor air or water. In Embodiment 1, the air-sending device 11 is one whose operating frequency can be varied in accordance with an instruction from the heat source control device 16. The heat exchanger 12 causes the air supplied by the air-sending device 11 and the refrigerant to exchange heat with each other. The air-sending device 11 sends out the air subjected to heat exchange in the heat exchanger 12 outdoors.

The expansion valve 13 decompresses and expands the refrigerant flowing thereinto from the heat exchanger 12. In Embodiment 1, the expansion valve 13 is a motor-operated expansion valve whose opening degree can be changed in accordance with an instruction from the heat source control device 16 and that can adjust the flow rate of the refrigerant according to a change in opening degree. The heat medium heat exchanger 14 is for example a plate heat exchanger or other heat exchangers and causes the refrigerant and the heat medium to exchange heat with each other. In the heat medium heat exchanger 14, the heat medium is cooled by exchanging heat with the refrigerant.

The circulation device 15 causes the heat medium to circulate through the heat medium circuit 6. The circulation device 15 regulates, according to a change in operation frequency by an inverter, the flow rate of the heat medium that is sent out to the heat medium 6. The circulation device 15 includes, for example, a pump and a pump driving device configured to drive the pump. The pump suctions the heat medium out of the heat medium circuit 6, applies pressure to the heat medium thus suctioned, and sends out the heat medium to the heat medium circuit 6, thereby causing the heat medium to circulate through the heat medium circuit 6. By changing its operation frequency based on an instruction from the heat source control device 16, the pump driving device can vary the flow rate of the heat medium that the pump sends out.

The heat source control device 16 includes, for example, a microcomputer or other devices and is connected to the compressor 10, the air-sending device 11, the expansion valve 13, and the circulation device 15 by signal lines (not illustrated). The heat source control device 16 outputs, via the signal lines separately to each of the compressor 10, the air-sending device 11, the expansion valve 13, and the circulation device 15, control signals for separately controlling each of the compressor 10, the air-sending device 11, the expansion valve 13, and the circulation device 15. It should be noted that the heat source control device 16 may perform wireless communication instead of wire communication with any of the compressor 10, the air-sending device 11, the expansion valve 13, and the circulation device 15. In this case, the heat source control device 16 transmits a control signal to any of these devices by wireless communication.

The heat source control device 16 performs wire communication or wireless communication with the integrated control device 3. The heat source control device 16 receives instruction information from the integrated control device 3. An example of the instruction information is information containing an instruction for activating or stopping the heat source apparatus 1 or information containing an instruction regarding the operating frequency of the compressor 10. The instruction information may also contain an instruction regarding the operating frequency of the circulation device 15. The heat source control device 16 operates in accordance with the instruction information thus received. It should be noted that the integrated control device 3 and the heat source control device 16 of a predetermined heat source apparatus 1 may be a single entity.

The flowmeter 17 measures the flow rate of the heat medium that flows out from the heat source apparatus 1. Although Fig. 1 shows an example in which the flowmeter 17 is placed in a heat medium pipe 5 situated at an outlet of the heat medium heat exchanger 14, that is, a heat medium pipe 5 to which the heat medium flows out from the heat medium heat exchanger 14, the flowmeter 17 may be placed in a heat medium pipe 5 situated upstream of the heat medium heat exchanger 14 and downstream of the circulation device 15. Apart from this, the flowmeter 17 may be placed outside the heat source apparatus 1 and in a heat medium pipe 5 to which the heat medium flows out from the heat source apparatus 1. The flowmeter 17 is an example of a flow rate acquisition device configured to acquire flow rate information that is information regarding the flow rate of the heat medium that flows out from the heat source apparatus 1. A value of the flow rate of the heat medium measured by the flowmeter 17 is an example of the flow rate information.

The flowmeter 17 performs wire communication or wireless communication with the heat source control device 16. The flowmeter 17 may perform communication with the integrated control device 3. The flowmeter 17 periodically transmits a measured value of the flow rate of the heat medium to the heat source control device 16. The flowmeter 17 may have a clock inside and may periodically transmit a measured value of the flow rate to the heat source control device 16 at times indicated by the clock. Alternatively, the flowmeter 17 may periodically receive from the heat source control device 16 a request signal that requests a value of the flow rate and transmit a measured value of the flow rate in accordance with the request signal. The heat source control device 16 transmits the value of the flow rate acquired from the flowmeter 17 to the integrated control device 3. It should be noted that the flowmeter 17 may perform communication with the integrated control device 3 and transmit a value of the flow rate directly to the integrated control device 3 without the mediation of the heat source control device 16.

The temperature sensor 7 measures the temperature of the heat medium flowing out from the heat medium heat exchanger 14. The temperature of the heat medium flowing out from the heat medium heat exchanger 14 may be hereinafter referred to as "outflow temperature". The temperature sensor 7 performs wire communication or wireless communication with the heat source control device 16. The temperature sensor 7 periodically transmits the outflow temperature thus measured to the heat source control device 16. The temperature sensor 7 may transmit the outflow temperature to the heat source control device 16 in accordance with a request from the heat source control device 16. The temperature sensor 7 is an example of a temperature acquisition device configured to acquire a value of the outflow temperature and notify the heat source control device 16 of the value of the outflow temperature thus acquired.

The heat source control device 16 controls the compressor 10 based on the outflow temperature acquired from the temperature sensor 7, unless doing so goes against the instruction information received from the integrated control device 3. Specifically, the heat source control device 16 regulates the operating frequency of the compressor 10 to make the outflow temperature reach a target temperature. The target temperature of the heat medium is determined by the performance of a load-side sensing device group 40 installed in the load system 4.

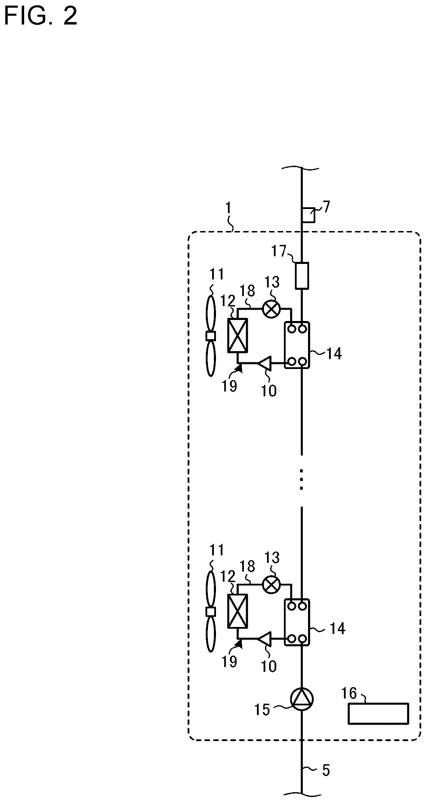

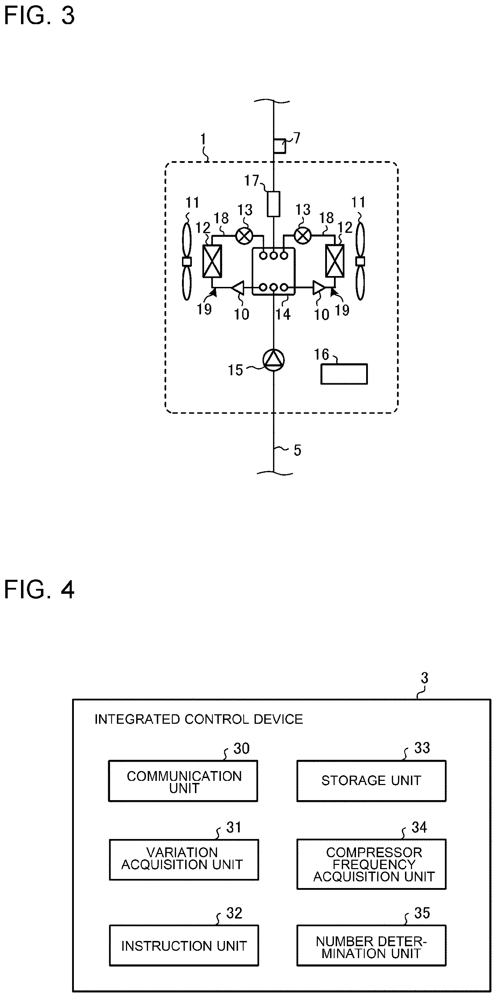

A heat source apparatus 1 may include a plurality of compressors 10. Fig. 2 is a diagram showing a first example configuration of a heat source apparatus including a plurality of compressors in Embodiment 1. Fig. 3 is a diagram showing a second example configuration of a heat source apparatus including a plurality of compressors in Embodiment 1. Fig. 2 shows a heat source apparatus 1 in which a plurality of refrigerant circuits 19 are provided in series to heat medium pipes 5, and Fig. 3 shows a heat source apparatus 1 in which a plurality of refrigerant circuits 19 are provided in parallel to heat medium pipes 5. Although Fig. 3 shows a heat source apparatus 1 including two refrigerant circuits 19 provided in parallel to heat medium pipes 5, a heat source apparatus 1 may include three or more refrigerant circuits 19 provided in parallel to heat medium pipes 5.

As shown in each of Figs. 2 and 3, each of the plurality of refrigerant circuits 19 is provided with a compressor 10, a heat exchanger 12, an expansion valve 13, and a heat medium heat exchanger 14 as in the case shown in Fig. 1. Further, the heat exchanger 12 in each of the plurality of refrigerant circuits 19 is provided with an air-sending device 11. The plurality of refrigerant circuits 19 are housed in a housing forming an outer shell of the heat source apparatus 1 indicated by dashed lines. Further, a heat source control device 16 too is housed in the housing. A temperature sensor 7 is provided in a heat medium pipe 5 to which the heat medium flows out from the heat source apparatus 1. Although each of Figs. 2 and 3 shows an example in which the temperature sensor 7 is provided outside the housing, the temperature sensor 7 may be provided inside the housing. Although each of Figs. 2 and 3 shows an example in which a flowmeter 17 is provided inside the housing and in a heat medium pipe 5 to which the heat medium flows out from the heat source apparatus 1, the flowmeter 17 may be provided outside the housing or may be provided in a heat medium pipe 5 from which the heat medium flows into the heat source apparatus 1. Although each of Figs. 2 and 3 shows an example in which a circulation device 15 is provided inside the housing, the circulation device 15 may be provided outside the housing. The heat source control device 16 is placed in the housing.

A heat source apparatus 1 may be one including a plurality of refrigerant circuits 19 provided in series to heat medium pipes 5 as shown in Fig. 2 and a plurality of refrigerant circuits 19 provided in parallel to heat medium pipes 5 as shown in Fig. 3.

Next, the integrated control device 3 is described with reference to Fig. 4. Fig. 4 is a block diagram showing an example configuration of an integrated control device in Embodiment 1. The integrated control device 3 includes a communication unit 30, a variation acquisition unit 31, an instruction unit 32, a storage unit 33, and a number determination unit 35. The communication unit 30 communicates with a heat source control device 16.

The variation acquisition unit 31 periodically acquires, via the communication unit 30 from the heat source control device 16, measurements yielded by the flowmeter 17. That is, the variation acquisition unit 31 periodically acquires measurements from the flowmeter 17 via the heat source control device 16 and the communication unit 30. Based on values of the flow rate periodically acquired from the flowmeter 17, the variation acquisition unit 31 acquires, by calculation or other processes, a value of variation during a first period of time in the flow rate of the heat medium that flows through the heat medium heat exchanger 14 of the heat source apparatus 1. The value of variation may be a difference of the flow rate at the end of the first period of time from the flow rate at the start of the first period of time. Alternatively, the value of variation may be a value of the proportion of the difference to the flow rate at the start of the first period of time. The proportion of the difference to the flow rate at the start of the first period of time refers specifically to X in a case in which the flow rate varies by X [%] during the first period of time. It should be noted that the first period of time is determined in advance. Simply put, the term "variation" hereinafter refers to the variation in the flow rate of the heat medium that flows through the heat medium heat exchanger 14. Further, a flow rate corresponding to the variation during the first period of time in the flow rate of the heat medium that flows through the heat medium heat exchanger 14 may be hereinafter referred to as "fluctuating flow rate".

Note here that even if the operating frequency of the circulation device 15 is constant, the flow rate of the heat medium that flows through the heat medium heat exchanger 14 may vary according to a state change, for example, in the load system 4, the heat medium pipes 5, and the number of operating heat source apparatuses 1. Specifically, the flow rate of the heat medium that flows through the heat medium heat exchanger 14 may vary according to a fluctuation in a load-side differential pressure that is a differential pressure between the pressure of the heat medium that flows into the load system 4 and the pressure of the heat medium that flows out from the load system 4. Further, the flow rate of the heat medium that flows through the heat medium heat exchanger 14 may vary according to formation of scale or other substances in the heat medium heat exchanger 14, the heat medium pipes 5, or other components.

The conventional refrigeration cycle system reduces a fluctuation in the flow rate of the heat medium by varying the operating frequency of a circulation device in a case in which the flow rate of the heat medium that flows through the heat medium heat exchanger has varied. It should be noted that the conventional refrigeration cycle system corresponds to the refrigeration cycle system 100 according to Embodiment 1 and that the conventional heat medium heat exchanger corresponds to a heat medium heat exchanger 14 in Embodiment 1. Moreover, the conventional circulation device corresponds to a circulation device 15 in Embodiment 1.

However, with the conventional control by which the operating frequency of the circulation device is varied according to a change in the flow rate of the heat medium, the change in the operating frequency of the circulation device cannot follow the change in the flow rate of the heat medium, so that the flow rate of the heat medium that flows through the heat medium heat exchanger becomes unstable. Moreover, there has been a risk that a destabilization of the flow rate of the heat medium that flows through the heat medium heat exchanger may result in a destabilization of the temperature of the heat medium.

The refrigeration cycle system 100 according to Embodiment 1 varies the operating frequency and capacity of a compressor 10 according to a fluctuation in the flow rate of the heat medium, thus providing stabilization of the temperature of the heat medium that flows through the heat medium heat exchanger 14. The following gives a detailed description.

The instruction unit 32 instructs the heat source control device 16 of a heat source apparatus 1 to vary the operating frequency of the compressor 10 of the heat source apparatus 1 based on the value of variation that the variation acquisition unit 31 acquired from the flowmeter 17 of the heat source apparatus 1. That is, the instruction unit 32 adjusts the operating frequency of the compressor 10 of a heat source apparatus 1 via the heat source control device 16 of the heat source apparatus 1 based on the value of variation that the variation acquisition unit 31 acquired from the flowmeter 17 of the heat source apparatus 1. In particular, in a case in which it is determined from the value of variation in the flow rate of the heat medium that flows through the heat medium heat exchanger 14 of a heat source apparatus 1 that there is a decrease in the flow rate of the heat medium that flows through the heat medium heat exchanger 14, the instruction unit 32 decreases the operating frequency and capacity of the compressor 10 of the heat source apparatus 1 based on the value of variation. For example, in a case in which the flow rate of the heat medium that flows through the heat medium heat exchanger 14 has decreased by X [%] during the first period of time, the instruction unit 32 decreases the capacity of the compressor 10 by X [%] or more.

In the case of a heat source apparatus 1 including a plurality of compressors 10, the instruction unit 32 regulates, based on the value of variation, a total capacity obtained by adding together the capacities of the plurality of compressors 10 and a total compressor frequency obtained by adding together the operating frequencies of the plurality of compressors 10. The instruction unit 32 regulates the total capacity, for example, in the following manner. In a case in which the flow rate of the heat medium that flows through the heat medium heat exchanger 14 has decreased by X [%] during the first period of time, the instruction unit 32 decreases the total capacity of the plurality of compressors 10 by X [%] or more. Even in the case of a heat source apparatus 1 including only a single compressor 10, the capacity of the single compressor 10 may be hereinafter referred to as "total capacity". Moreover, the operating frequency of the single compressor 10 may be hereinafter referred to as "total compressor frequency".

The aforementioned amount of change in total compressor frequency or total capacity with respect to the value of variation in the flow rate of the heat medium that flows through the heat medium heat exchanger 14 is determined based on the after-mentioned first correspondence information. A value of the amount of change in total capacity or total compressor frequency may be hereinafter referred to as "compressor controlling value". Although the following describes the compressor controlling value as a value of the amount of change in total compressor frequency, the term "compressor controlling value" may be read as "value of the amount of change in total capacity". The total compressor frequency may be varied by a proportion to the current total compressor frequency, such as X [%] mentioned above, and in this case, the compressor controlling value is a value of the proportion of a value of the total compressor frequency to be varied to a value of the current total compressor frequency. The compressor controlling value may be a difference between the total compressor frequency to be varied and the total compressor frequency thus varied. In a case in which the compressor controlling value is a value of the amount of change in total capacity, the compressor controlling value may be a value of the proportion of a value of the total capacity to be varied to a value of the current total capacity or may be a difference between the total capacity to be varied and the total capacity thus varied.

The storage unit 33 stores first correspondence information. The first correspondence information is information associating the value of variation and the compressor controlling value with each other. In a case in which the refrigeration cycle system 100 includes a plurality of heat source apparatuses 1, the first correspondence information associates the value of variation and the compressor controlling value with each other for each heat source apparatus 1.
The first correspondence information is for example a mathematical expression that relates the value of variation and the compressor controlling value with each other. Alternatively, the first correspondence information may be information such as a table form associating the value of variation and the compressor controlling value with each other. A compressor controlling value in the first correspondence information is a value at which the temperature of the heat medium is stabilized by changing the total compressor frequency by the compressor controlling value in a case in which the value of variation in the flow rate of the heat medium that flows through the heat medium heat exchanger 14 is a value of variation associated with the compressor controlling value. The first correspondence information is determined in advance according to the model, performance, or other attributes of the heat source apparatus 1, the results of experiments conducted in advance, the results of field operation up to this time, or other conditions.

The instruction unit 32 instructs the heat source control device 16 via the communication unit 30 to vary the total compressor frequency according to the value of variation based on the first correspondence information. In accordance with the instruction from the instruction unit 32, the heat source control device 16 varies the total compressor frequency and causes one or more compressors 10 to operate at the total compressor frequency thus varied. That is, the instruction unit 32 varies the total compressor frequency according to the value of variation via the communication unit 30 and the heat source control device 16 and causes the one or more compressors 10 to operate at the total compressor frequency thus varied.

In Embodiment 1, a limit may be set on the value of variation in a case in which the flow rate of the heat medium that flows through the heat medium heat exchanger 14 decreases. The absolute value of the limit variation may be hereinafter referred to as "limit value". In a case in which the flow rate of the heat medium that flows through the heat medium heat exchanger 14 has decreased and the magnitude of the variation is greater than or equal to the limit value, the instruction unit 32 may instructs the heat source control device 16 to change the total compressor frequency to a lower-limit value.

Note here that the quantity of heat that the heat medium exchanges with the refrigerant is obtained from the product of the difference in temperature of the heat medium between the inflow and outflow sides of the heat medium heat exchanger 14 and the flow rate of the heat medium that flows through the heat medium heat exchanger 14. Further, the quantity of heat is obtained from the product of the difference in temperature of the refrigerant between the inflow and outflow sides of the heat medium heat exchanger 14 and the flow rate of the refrigerant that flows through the heat medium heat exchanger 14. Note here that in a case in which the flow rate of the refrigerant that flows through the heat medium heat exchanger 14 is high and the flow rate of the heat medium that flows through the heat medium heat exchanger 14 is low, there is a risk that the heat medium may be excessively cooled by exchanging the quantity of heat with the refrigerant. This may cause freezing to occur in the heat medium heat exchanger 14. Alternatively, the decrease in the temperature of the heat medium in the heat medium heat exchanger 14 may cause the heat source apparatus 1 to stop. A configuration of components of a heat source control device 16 for the avoidance of this sort of problem is described below.

The storage unit 33 stores second correspondence information associating a first lower-limit value of the flow rate of the heat medium that passes through the heat medium heat exchanger 14 and a lower-limit value of the total compressor frequency with each other. Alternatively, the second correspondence information may be information associating the first lower-limit value of the flow rate of the heat medium that passes through the heat medium heat exchanger 14 and a lower-limit value of the total capacity with each other. In a case in which the refrigeration cycle system 100 includes a plurality of heat source apparatuses 1, the second correspondence information associates the first lower-limit value and the lower-limit value of the total compressor frequency or total capacity with each other for each heat source apparatus 1. The lower-limit value of the total compressor frequency is equivalent to the total of lower-limit values of the operating frequencies of the one or more compressors 10. Further, the lower-limit value of the total capacity is equivalent to the total of lower-limit values of the capacities of one or more of the compressors 10.

A first lower-limit value in the second correspondence information is such a lower-limit of the flow rate of the heat medium that the heat source apparatus 1 does not come into a thermo-off state or such a lower-limit value of the flow rate of the heat medium that the heat medium does not become frozen in the heat medium heat exchanger 14 in a case in which the total compressor frequency assumes a lower-limit value. The first lower-limit value is a value that is determined according to the model, performance, or other attributes of the heat source apparatus 1, experiments conducted in advance, or other conditions.

In a case in which a value, acquired from the flowmeter 17, of the flow rate of the heat medium that flows through the heat medium heat exchanger 14 is less than or equal to the first lower-limit value, the instruction unit 32 instructs the heat source control device 16 via the communication unit 30 to change the total compressor frequency to the lower-limit total compressor frequency. In accordance with the instruction from the instruction unit 32, the heat source control device 16 changes the total compressor frequency to the lower-limit total compressor frequency and causes the one or more compressors 10 to operate at the total compressor frequency thus changed. That is, the instruction unit 32 changes the total compressor frequency of the one or more compressors 10 to the lower-limit total compressor frequency via the communication unit 30 and the heat source control device 16 and causes the one or more compressors 10 to operate at the total compressor frequency thus changed.

Note here that as mentioned above, the heat source control device 16 changes the total compressor frequency of the one or more compressors 10 based on the outflow temperature acquired from the temperature sensor 7. However, when instructed by the instruction unit 32 to decrease the total compressor frequency, the heat source control device 16 decreases the total compressor frequency in accordance with the instruction from the instruction unit 32, even if it is necessary to raise the total compressor frequency to make the outflow temperature reach the target temperature.

The compressor frequency acquisition unit 34 acquires outflow temperatures either directly from the temperature sensors 7 of one or more heat source apparatuses 1 or via the heat source control devices 16 of the one or more heat source apparatuses 1. The compressor frequency acquisition unit 34 acquires, by calculation or other processes, a required compressor frequency that is the operating frequency of a compressor 10 that is needed for an outflow temperature acquired to come close to the target temperature.

Note here that a required compressor frequency calculated by the compressor frequency acquisition unit 34 may exceed a range within which the total compressor frequency of one or more compressors 10 in one heat source apparatus 1 can vary. The number determination unit 35 determines the number of operating heat source apparatuses 1 based on a required compressor frequency acquired by the compressor frequency acquisition unit 34.

In a case in which the refrigeration cycle system 100 includes only one heat source apparatus 1, the integrated control device 3 does not need to include the number determination unit 35. The following description of the number determination unit 35 assumes that the refrigeration cycle system 100 includes a plurality of heat source apparatuses 1.

The number determination unit 35 acquires, by calculation or other processes, the minimum number of operating heat source apparatuses 1 required to attain the required compressor frequency acquired by the compressor frequency acquisition unit 34. After acquiring the minimum required number of operating heat source apparatuses 1, the number determination unit 35 determines the number of operating heat source apparatuses 1 based on a coefficient of performance (COP). That is, the number determination unit 35 determines the number of operating heat source apparatuses 1 at which the coefficient of performance reaches its maximum. The following describes the number determination unit 35 in more detail.

The number determination unit 35 acquires the total compressor frequency of one or more compressors 10 in each heat source apparatus 1 from the heat source control device 16 of each of the plurality of the heat source apparatuses 1 via the communication unit 30. The number determination unit 35 stores an upper limit of the total compressor frequency of each heat source apparatus 1. It should be noted that the number determination unit 35 may acquire an operating ratio from the heat source control device 16 of each heat source apparatus 1 instead of a total compressor frequency. The term "operating ratio" refers to the ratio of the current total compressor frequency to the upper-limit total compressor frequency. In a case in which the number determination unit 35 acquires an operating ratio from each heat source control device 16, the number determination unit 35 does not need to store an upper limit of the total compressor frequency of each heat source apparatus 1.

Note here that the operating ratio or total compressor frequency in a case in which each compressor 10 operates at peak efficiency is determined in advance. It should be noted that the efficiency corresponds to a coefficient of performance, and the case in which each compressor 10 operates at peak efficiency refers to a case in which the coefficient of performance is at a maximum. The number determination unit 35 increases or decreases the number of operating heat source apparatuses 1 so that the sum of total compressor frequencies obtained from the operating heat source apparatuses 1 is greater than or equal to the required compressor frequency and so that each compressor 10 operates at peak efficiency.

In increasing the number of operating heat source apparatuses 1, the number determination unit 35 transmits start-to-operate instructions via the communication unit 30 to as many suspended heat source apparatuses 1 as the number of operating heat source apparatuses 1 is increased, and causes the suspended heat source apparatuses 1 to start to operate. The heat source control device 16 of a heat source apparatus 1 having acquired a start-to-operate instruction from the number determination unit 35 via the communication unit 30 causes the circulation device 15 to start to operate and then causes the one or more compressors 10 to start to operate. In this case, in a case in which the heat source apparatus 1 includes a plurality of compressors 10, the heat source control device 16 increases or decreases the number of operating compressors 10 so that each compressor 10 operates at peak efficiency.

In decreasing the number of operating heat source apparatuses 1, the number determination unit 35 transmits stop instructions via the communication unit 30 to as many operating heat source apparatuses 1 as the number of operating heat source apparatuses 1 is decreased, and causes the operating heat source apparatuses 1 to stop operating. The heat source control device 16 of a heat source apparatus 1 having acquired a stop instruction from the number determination unit 35 via the communication unit 30 causes the one or more compressors 10 to stop.

In a case in which an operating heat source apparatus 1 not acquiring a stop instruction from the number determination unit 35 includes a plurality of compressors 10, the heat source control device 16 of the operating heat source apparatus 1 increases or decreases the number of operating compressors 10 so that each compressor 10 operates at peak efficiency.

An increase in the number of operating heat source apparatuses 1 may lead to a decrease in the flow rate of the heat medium that flows through the heat medium heat exchanger 14 of each heat source apparatus 1. This may destabilize the temperature of the heat medium that flows through the heat medium heat exchanger 14.

However, as mentioned above, in Embodiment 1, the variation acquisition unit 31 acquires the value of variation in the flow rate of the heat medium that flows through the heat medium heat exchanger 14 of each heat source apparatus 1, and the instruction unit 32 varies the total compressor frequency of each heat source apparatus 1 based on the value of variation. Further, the instruction unit 32 changes the total compressor frequency of each heat source apparatus 1 to the lower-limit value in a case in which the flow rate from the flowmeter 17 of each heat source apparatus 1 assumes the first lower-limit value. Thus, in Embodiment 1, the integrated control device 3 provides stabilization of the temperature of the heat medium that flows through the heat medium heat exchanger 14.

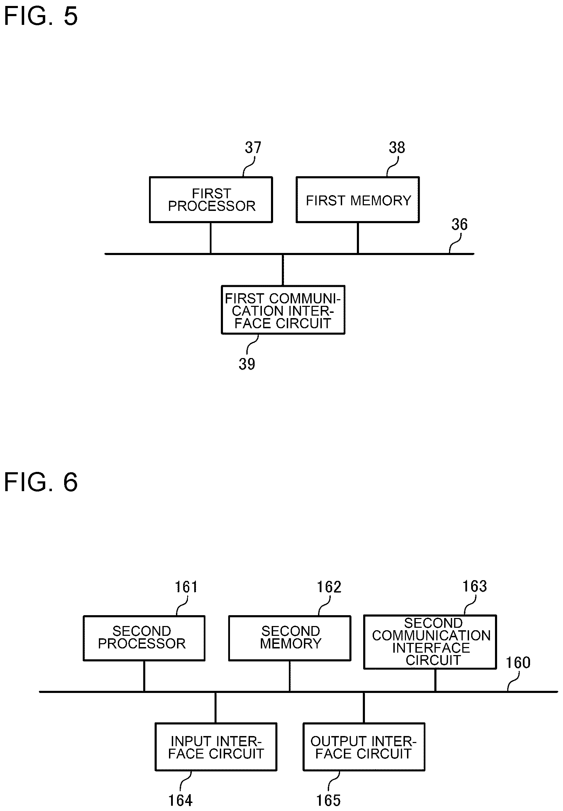

The following describes a hardware configuration of the integrated control device 3 in Embodiment 1. Fig. 5 is a diagram showing an example hardware configuration of the integrated control device in Embodiment 1. In Embodiment 1, the integrated control device 3 can be constituted, for example, by using a first processor 37, a first memory 38, and a first communication interface circuit 39 that are connected to one another by a first bus 36. The first processor 37 is for example a central processing unit (CPU) or a micro processing unit (MPU). The first memory 38 is for example a read-only memory (ROM) or a random-access memory (RAM). The first memory 38 may be a hard disk drive (HDD), a solid state drive (SSD), a flush memory such as a universal serial bus (USB) memory or an SD memory card, or a compact disc (CD). The first processor 37 may have an internal memory such as a ROM or a RAM.

The functions of the communication unit 30 can be implemented by the first communication interface circuit 39. The functions of the storage unit 33 can be implemented by the first memory 38. The functions of the variation acquisition unit 31, the instruction unit 32, the compressor frequency acquisition unit 34, and the number determination unit 35 can be implemented by the first processor 37 reading out and executing various types of program stored in the first memory 38 or the internal memory. All or part of the integrated control device 3 may be dedicated hardware such as an application-specific integrated circuit (ASIC), a complex programmable logic device (CPLD), or a field programmable gate array (FPGA).

Next, a hardware configuration of a heat source control device 16 in Embodiment 1 is described. Fig. 6 is a diagram showing an example hardware configuration of a heat source control device in Embodiment 1. In Embodiment 1, the heat source control device 16 can be constituted, for example, by using a second processor 161, a second memory 162, a second communication interface circuit 163, an input interface circuit 164, and an output interface circuit 165, or other components that are connected to one another by a second bus 160. The second processor 161 is for example a CPU or an MPU. The second memory 162 is for example a ROM or a RAM.

The function with which for the heat source control device 16 to communicate with the integrated control device 3 can be implemented by the second communication interface circuit 163. The function with which for the heat source control device 16 to acquire measurements from the temperature sensor 7, the flowmeter 17, or other components can be implemented by the input interface circuit 164. It should be noted that the heat source control device 16 may acquire measurements from all or some of the temperature sensor 7, the flowmeter 17, or other components by wireless communication. The function with which for the heat source control device 16 to acquire measurements in this case can be implemented by a wireless communication interface circuit (not illustrated) instead of or in combination with the input interface circuit 164. The function with which for the heat source control device 16 to control the compressor 10, the expansion valve 13, or other components can be implemented by the second processor 161, the second memory 162, and the output interface circuit 165. The heat source control device 16 may control all or some of the compressor 10, the expansion valve 13, or other components by wireless communication. The control function of the heat source control device 16 in this case can be implemented by the second processor 161, the second memory 162, and a wireless communication interface circuit (not illustrated) instead of or in combination with the output interface circuit 165. All or part of the heat source control device 16 may be dedicated hardware such as an ASIC, a CPLD, or an FPGA.

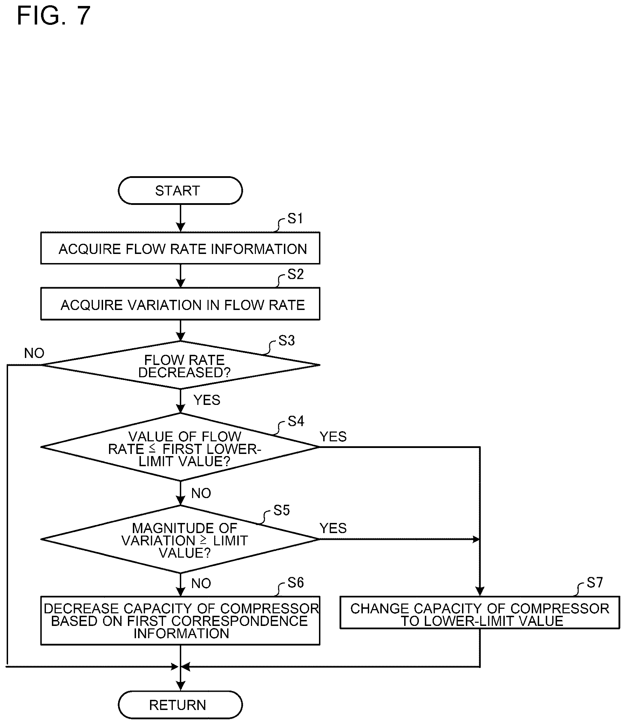

In the following, a heat medium temperature stabilization process by the refrigeration cycle system 100 according to Embodiment 1 is described with reference to Fig. 7. Fig. 7 is a flow chart illustrating a sequence of actions of a compressor control process by the refrigeration cycle system according to Embodiment 1. To facilitate understanding, Fig. 7 shows a process in a case in which the refrigeration cycle system 100 includes one heat source apparatus 1. A process in a case in which the refrigeration cycle system 100 includes a plurality of heat source apparatuses 1 is parallel processing of steps S1 to S7 for each heat source apparatus 1. The refrigeration cycle system 100 repeatedly executes processing of steps S1 to S7 in a cycle of the first period of time.

In step S1, the communication unit 30 of the integrated control device 3 acquires flow rate information either directly or via the heat source control device 16 from the flowmeter 17. The flow rate information is a value of the flow rate of the heat medium that flows through the heat medium heat exchanger 14. In step S2, the variation acquisition unit 31 acquires a value of variation in the flow rate during the first period of time based on the flow rate information acquired by the communication unit 30 in current and previous steps S1.

In step S3, the instruction unit 32 determines, based on the value of variation acquired by the variation acquisition unit 31 in step S2, whether the flow rate of the heat medium that flows through the heat medium heat exchanger 14 has decreased. In a case in which there is no decrease in the flow rate of the heat medium that flows through the heat medium heat exchanger 14 (step S3: NO), the refrigeration cycle system 100 returns the process to step S1. In a case in which the flow rate of the heat medium that flows through the heat medium heat exchanger 14 has decreased (step S3: YES), the instruction unit 32 determines in step S4 whether the value of the flow rate indicated by the flow rate information acquired by the communication unit 30 in current step S1 is less than or equal to the first lower-limit value.

In a case in which the value of the flow rate indicated by the flow rate information acquired by the communication unit 30 in current step S1 is greater than the first lower-limit value (step S4: NO), the instruction unit 32 determines in step S5 whether the magnitude of the variation is greater than or equal to the limit value. In a case in which the magnitude of the variation is greater than or equal to the limit value (step S5: YES), the integrated control device 3 shifts the process to step S7. In a case in which magnitude of the variation is less than the limit value (step S5: NO), the instruction unit 32 decreases the capacity of a compressor 10 based on the first correspondence information in step S6. That is, the instruction unit 32 instructs the heat source control device 16 to decrease the total capacity of one or more compressors 10 by the amount of decrease in total capacity based on the first correspondence information, and the heat source control device 16 decreases the operating capacity of a compressor 10 in accordance with the instruction.

In a case in which the value of the flow rate acquired by the communication unit 30 in current step S1 is less than or equal to the first lower-limit value (step S4: YES), the integrated control device 3 shifts the process to step S7. In step S7, the instruction unit 32 instructs the heat source control device 16 to change the capacity of a compressor 10 to a lower-limit capacity, which is a predetermined lower-limit capacity, and the heat source control device 16 causes the compressor 10 to operate at the lower-limit capacity. After processing of each of steps S6 and S7, the refrigeration cycle system 100 returns the process to step S1.

In a case in which the instruction unit 32 has determined in step S3 that the flow rate of the heat medium that flows through the heat medium heat exchanger 14 has increased, the instruction unit 32 may increase the capacity of a compressor 10 before the process returns to step S1.

The integrated control device 3 is an example of a controller configured to vary the total capacity of compressors 10. Further, a combination of the heat source control device 16 and the integrated control device 3 too is an example of a controller.

The following describes effects brought about by a refrigeration cycle system 100 of Embodiment 1. A refrigeration cycle system 100 according to Embodiment 1 includes a heat source apparatus 1 and a controller. The heat source apparatus 1 cools a heat medium. The heat source apparatus 1 includes a heat medium heat exchanger 14, a flowmeter 17, and a compressor 10. The heat medium heat exchanger 14 causes the heat medium and refrigerant to exchange heat with each other. The flowmeter 17 acquires flow rate information that is a value of a flow rate of the heat medium that flows through the heat medium heat exchanger 14. The compressor 10 compresses the refrigerant. In a case in which the flow rate of the heat medium that flows through the heat medium heat exchanger 14 varies during a first period of time, the controller varies an operating capacity of the compressor 10 and causes the compressor 10 to operate at the operating capacity thus varied. As a result of this, the capacity of the compressor 10 varies according to a change in the flow rate of the heat medium that flows through the heat medium heat exchanger 14, so that the amount of the refrigerant that flows into the heat medium heat exchanger 14 becomes suitable for the flow rate of the heat medium that flows into the heat medium heat exchanger 14. This provides stabilization of the temperature of the heat medium that flows through the heat medium heat exchanger 14.

In Embodiment 1, in a case in which the flow rate of the heat medium that flows through the heat medium heat exchanger 14 decreases during the first period of time, the controller decreases the operating capacity of the compressor 10 and causes the compressor 10 to operate at the operating capacity thus decreased. Note here that in a case in which the flow rate of the heat medium that flows through the heat medium heat exchanger 14 is low, there is a risk that the heat medium may excessively decrease in temperature by exchanging the quantity of heat with the refrigerant. This may cause freezing to occur in the heat medium heat exchanger 14. Alternatively, the decrease in the temperature of the heat medium in the heat medium heat exchanger 14 may cause the heat source apparatus 1 to stop. In Embodiment 1, the controller decreases the operating capacity of the compressor 10 according to the decrease in the flow rate of the heat medium, thus making it possible to inhibit stoppage of the heat source apparatus 1 and freezing in the heat medium heat exchanger 14.

In Embodiment 1, the controller varies the operating capacity based on a value of variation in the flow rate during the first period of time and causes the compressor 10 to operate at the operating capacity thus varied. As a result of this, the amount of the refrigerant that flows into the heat medium heat exchanger 14 becomes suitable for a fluctuation in the flow rate of the heat medium that flows into the heat medium heat exchanger 14. This provides stabilization of the temperature of the heat medium that flows through the heat medium heat exchanger 14.

**In** Embodiment 1, in a case in which a magnitude of the variation in the case in which the flow rate decreases is greater than or equal to a limit value determined in advance, the controller changes the operating capacity to a lower-limit capacity and causes the compressor 10 to operate at the lower-limit capacity. As a result of this, even if the flow rate of the heat medium that flows through the heat medium heat exchanger 14 abruptly decreases, the flow rate of the refrigerant that flows into the heat medium heat exchanger 14 decreases according to the decrease in the flow rate of the heat medium. This inhibits stoppage of the heat source apparatus 1 and freezing in the heat medium heat exchanger 14.

**In** Embodiment 1, in a case in which the flow rate of the heat medium that flows through the heat medium heat exchanger 14 is less than or equal to a first lower-limit value, the controller changes the operating capacity of the compressor 10 to a lower-limit capacity and causes the compressor 10 to operate at the lower-limit capacity. As a result of this, the refrigeration cycle system 100 can inhibit stoppage of the heat source apparatus 1 and freezing in the heat medium heat exchanger 14, which may occur when the flow rate of the heat medium that flows through the heat medium heat exchanger 14 drops to the first lower-limit value.

Although, in Embodiment 1, the first correspondence information is information associating the value of variation and a compressor controlling value with each other, the first correspondence information may be information containing a mathematical expression associating the flow rate of the heat medium that flows through the heat medium heat exchanger 14 and the total capacity or total compressor frequency of one or more compressors 10 with each other. Alternatively, the first correspondence information may for example be table-form information associating the flow rate of the heat medium that flows through the heat medium heat exchanger 14 and the total capacity or total compressor frequency of the one or more compressors 10 with each other. **In** this case, the first correspondence information contains second correspondence information associating the first lower-limit value of the flow rate of the heat medium that flows through the heat medium heat exchanger 14 and the lower-limit value of the total capacity or total compressor frequency of the one or more compressors 10 with each other. **In** the first correspondence information, a higher total capacity or a higher total compressor frequency is associated with a greater value of the flow rate. A value of the total capacity or total compressor frequency in the first correspondence information is for example a predetermined value at which the heat medium heat exchanger 14 does not become frozen or a predetermined value at which the heat source apparatus 1 does not come into a thermo-off state in a case in which the value of the flow rate of the heat medium that flows through the heat medium heat exchanger 14 has become a value of the flow rate associated with the value of the total capacity or total compressor frequency.

**In** a case in which the first correspondence information is information associating the flow rate of the heat medium that flows through the heat medium heat exchanger 14 and the total capacity or total compressor frequency of one or more compressors 10 with each other, the instruction unit 32 controls the one or more compressors 10 so that the one or more compressors 10 operate at the total capacity or total compressor frequency associated in the first correspondence information with the value of the flow rate acquired from the flowmeter 17.

### Embodiment 2.

Embodiment 2 describes an example regarding control of compressors 10 in a case in which the refrigeration cycle system 100 includes a plurality of heat source apparatuses 1 and the integrated control device 3 varies the number of operating heat source apparatuses 1. Constituent elements of Embodiment 2 that are similar to those of Embodiment 1 are given identical reference signs. Configurations of Embodiment 2 that are similar to those of Embodiment 1, functions of Embodiment 2 that are similar to those of Embodiment 1, or other features are not described below unless the circumstances are exceptional.

In Embodiment 2, in a case in which the number of operating heat source apparatuses 1 thus determined is larger than the number of currently operating heat source apparatuses 1, the integrated control device 3 decreases the total compressor frequency and total capacity of the one or more compressors 10 of each heat source apparatus 1 based on the amount of increase in the number of operating heat source apparatuses 1. That is, in a case in which the number of operating heat source apparatuses 1 increases, the integrated control device 3 decreases the total compressor frequency and total capacity of the one or more compressors 10 of each heat source apparatus 1 based on the amount of increase in the number of operating heat source apparatuses 1 and causes the one or more compressors 10 to operate at the total compressor frequency thus decreased.

The storage unit 33 stores third correspondence information associating the increase in number of operating heat source apparatuses 1 and the compressor controlling value, which is the amount of decrease in the total compressor frequency and total capacity of the one or more compressors 10 of each heat source apparatus 1, with each other. The third correspondence information is for example a mathematical expression representing a relationship between the increase in number of operating heat source apparatuses 1 and the compressor controlling value. Alternatively, the third correspondence information may be information such as a table form associating the increase in number of operating heat source apparatuses 1 and the compressor controlling value with each other.

A compressor controlling value in the third correspondence information is a value at which even if the number of operating heat source apparatuses 1 increases by an increase in number corresponding to the compressor controlling value in the third correspondence information, the temperature of the heat medium is stabilized by varying the total compressor frequency or total capacity of compressors 10 by the compressor controlling value. The third correspondence information is determined in advance according to the model, performance, or other attributes of each heat source apparatus 1, the results of experiments conducted in advance, the results of operation, or other conditions.

The instruction unit 32 of the integrated control device 3 instructs the heat source control device 16 of each of the operating heat source apparatuses 1 via the communication unit 30 to vary the total compressor frequency of one or more compressors 10 of the heat source apparatus 1 by the compressor controlling value associated by the third correspondence information with the increase in number of operating heat source apparatuses 1. The heat source control device 16 varies the total compressor frequency of the one or more compressors 10 in accordance with the instruction and causes the one or more compressors 10 to operate at the total compressor frequency thus varied.

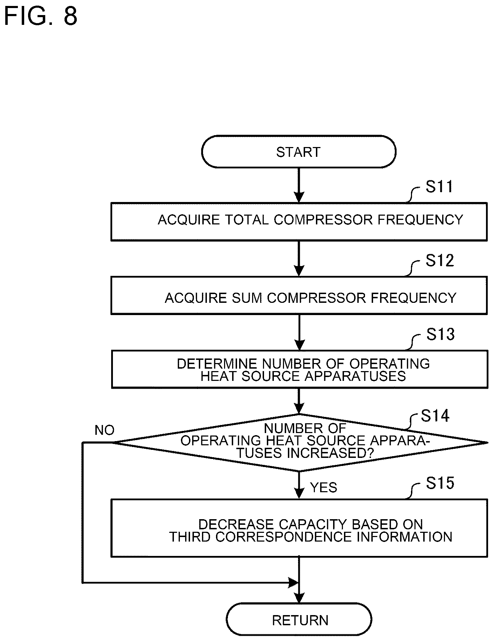

In the following, a heat medium temperature stabilization process by the refrigeration cycle system 100 according to Embodiment 2 is described with reference to Fig. 8. Fig. 8 is a flow chart illustrating a sequence of actions of a compressor control process by a refrigeration cycle system according to Embodiment 2. The process shown in Fig. 8 is executed in parallel with the process shown in Fig. 7. To decrease instability of the refrigeration cycle system 100 entailed by an increase or decrease in the number of operating heat source apparatuses 1, that is, activation or stoppage of a heat source apparatus 1, the process shown in Fig. 8 is executed every time a second period of time determined in advance elapses. The second period of time is different in length from, but may be the same in length as, the first period of time.

In step S11, the number determination unit 35 of the integrated control device 3 acquires total compressor frequencies from each separate heat source apparatus 1. In step S12, the number determination unit 35 acquires, by calculation or other processes, a sum compressor frequency that is the sum of total compressor frequencies acquired from each separate heat source apparatus 1. In step S13, the number determination unit 35 determines the number of operating heat source apparatuses 1 so that the sum compressor frequency is higher than or equal to the required compressor frequency and so that operating compressors 10 operate at peak efficiency. In a case in which the number of operating heat source apparatuses 1 thus determined is larger than the current number of operating heat source apparatuses 1, that is, the number of operating heat source apparatuses 1 determined in previous step S13, the instruction unit 32 of the integrated control device 3 causes as many suspended heat source apparatuses 1 as the number of operating heat source apparatuses 1 is increased to start to operate. It should be noted that the process by which the instruction unit 32 causes the suspended heat source apparatuses 1 to start to operate may be performed before the after-mentioned step S14, may be performed in parallel with processing of step S14 or S15, or may be performed after processing of step S14 or S15. In a case in which the number of operating heat source apparatuses 1 thus determined is smaller than the current number of operating heat source apparatuses 1, the integrated control device 3 stops as many operating heat source apparatuses 1 as the number of operating heat source apparatuses 1 is decreased.

In step S14, the instruction unit 32 determines whether the number of operating heat source apparatuses 1 determined in current step S13 is larger than the number of operating heat source apparatuses 1 determined in previous step S13. In a case in which there is no increase in the number of operating heat source apparatuses 1 (step S14: NO), the refrigeration cycle system 100 returns the process to step S11. In a case in which the number of operating heat source apparatuses 1 has increased (step S14: YES), the instruction unit 32 decreases the capacity of a compressor 10 of each heat source apparatus 1 based on the third correspondence information in step S15 and causes the compressor 10 to operate at the capacity thus decreased. That is, the instruction unit 32 instructs the heat source control device 16 of each of the operating heat source apparatuses 1 to decrease the total capacity of the one or more compressors 10 of the heat source apparatus 1 by the amount of decrease in total capacity based on the third correspondence information, and the heat source control device 16 decreases the operating capacity of a compressor 10 in accordance with the instruction. After processing of step S15, the refrigeration cycle system 100 returns the process to step S11.

The following describes effects brought about by the refrigeration cycle system 100 according to Embodiment 2. In Embodiment 2, the controller increases or decreases the number of operating ones of the heat source apparatuses 1 based on an operating frequency of the compressor 10 of an operating one of the plurality of heat source apparatuses 1. In increasing a number of operating heat source apparatuses 1, the controller decreases the operating capacity of the compressor 10 of the operating heat source apparatus 1 and causes the compressor 10 to operate at the operating capacity thus decreased. As a result of this, even in a case in which the number of operating heat source apparatuses 1 has increased, the operating capacity of a compressor 10 of each of the operating heat source apparatuses 1 decreases. This provides stabilization of the temperature of the heat medium that flows through the heat medium heat exchanger 14.

### Embodiment 3.

A refrigeration cycle system 100 according to Embodiment 3 is configured to decrease the number of operating heat source apparatuses 1 in a case in which there are a plurality of operating heat source apparatuses 1 and the flow rate of the heat medium that flows through the heat medium heat exchanger 14 decreases. The following details the refrigeration cycle system 100 according to Embodiment 3. Constituent elements of Embodiment 3 that are similar to those of Embodiments 1 and 2 are given identical reference signs. Configurations of Embodiment 3 that are similar to those of Embodiments 1 and 2, functions of Embodiment 3 that are similar to those of Embodiments 1 and 2, or other features are not described below unless the circumstances are exceptional.

In a case in which the plurality of heat source apparatuses 1 include two or more operating heat source apparatuses 1 and the flow rate of the heat medium that flows through the heat medium heat exchanger 14 of each of the two or more operating heat source apparatuses 1 has decreased, the integrated control device 3 decreases the number of operating heat source apparatuses 1. In so doing, the integrated control device 3 may decrease the number of operating heat source apparatuses 1 based on a value of variation in the flow rate of the heat medium that flows through the heat medium heat exchanger 14 of each of the two or more heat source apparatuses 1. Specifically, the storage unit 33 may store fourth correspondence information associating the number of operating heat source apparatuses 1, the value of variation in the flow rate of the heat medium that flows through the heat medium heat exchanger 14 of each of the operating heat source apparatuses 1 included in the number, and a number corresponding to the amount of decrease in the number of operating heat source apparatuses 1 with one another. Moreover, the instruction unit 32 may stop as many heat source apparatuses 1 as the amount of decrease in the number of operating heat source apparatuses 1, with the number of operating heat source apparatuses 1 being associated in the fourth correspondence information with the current number of operating heat source apparatuses 1 and a value of variation in flow rate acquired from the flowmeters 17 of the heat source apparatuses 1 included in the number. A number corresponding to the amount of decrease in the number of operating heat source apparatuses 1 may be hereinafter referred to as "decreased number". The decreased number of heat source apparatuses 1 indicated by the fourth correspondence information is a value at which the temperature of the heat medium that flows through the heat medium heat exchanger 14 is stabilized by the heat source apparatuses 1 included in the decreased number stopping in a case in which the flow rates of the heat medium that flows through the heat medium heat exchangers 14 in the heat source apparatuses 1 included in the number associated with the decreased number have decreased by a value of variation associated with the number. The fourth correspondence information is determined in advance according to the model, performance, or other attributes of each heat source apparatus 1, the results of experiments conducted in advance, the results of operation, or other conditions.

The integrated control device 3 may decrease the number of operating heat source apparatuses 1 in a case in which two or more heat source apparatuses 1 are operating and the flow rate of the heat medium that flows through the heat medium heat exchanger 14 of each of the two or more heat source apparatuses 1 has become less than or equal to a second lower-limit value determined in advance. In this case, the storage unit 33 may store fifth correspondence information associating the second lower-limit value, the number of two or more operating heat source apparatuses 1, and the decreased number with one another. The second lower-limit value may be a value equal to or different from the first lower-limit value and, for example, is a minimum value of the flow rate at which the heat medium heat exchanger 14 does not become frozen or a minimum value of the flow rate at which an operating compressor 10 does not stop. Moreover, in a case in which the flow rate of the heat medium that flows through the heat medium heat exchanger 14 of each of the two or more heat source apparatuses 1 included in the number has become less than or equal to the second lower-limit value, the instruction unit 32 stops as many operating heat source apparatuses 1 as the decreased number associated with the number of two or more operating heat source apparatuses 1 in the fifth correspondence information. The decreased number indicated by the fifth correspondence information is a value at which in a case in which the flow rate of the heat medium that flows through the heat medium heat exchanger 14 of an operating heat source apparatus 1 has become less than or equal to the second lower-limit value, the temperature of the heat medium that flows through the heat medium heat exchanger 14 is stabilized by the heat source apparatuses 1 included in the decreased number stopping. Apart from this, the fifth correspondence information may be information associating the second lower-limit value and the number of operating heat source apparatuses 1 with each other. In this case, the number of operating heat source apparatuses 1 in the fifth correspondence information is such that the flow rate of the heat medium that flows through the heat medium heat exchanger 14 can maintain the second lower-limit value. Further, in this case and a case in which the flow rate of the heat medium that flows through the heat medium heat exchanger 14 of an operating heat source apparatus 1 is less than or equal to the second lower-limit value, the integrated control device 3 makes the number of operating heat source apparatuses 1 smaller than or equal to the number of operating heat source apparatuses 1 associated with the second lower-limit value in the fifth correspondence information.

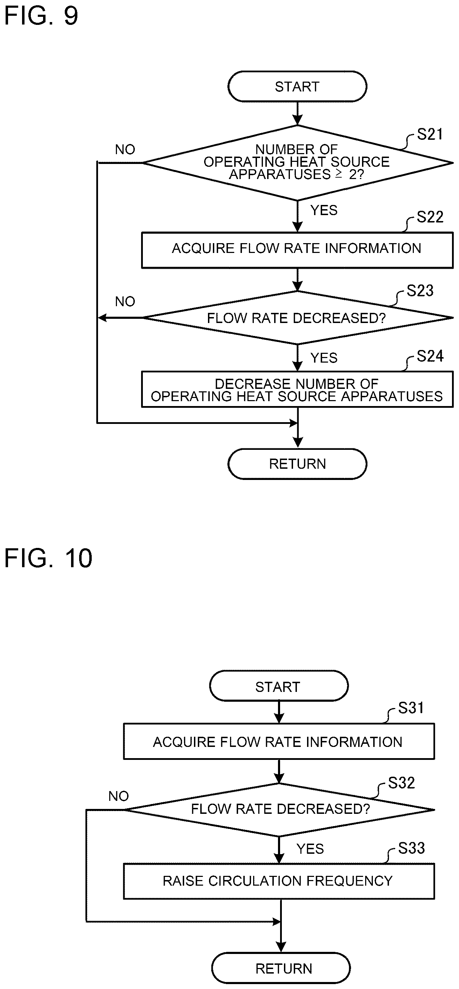

In the following, a heat medium temperature stabilization process in Embodiment 3 is described with reference to Fig. 9. Fig. 9 is a flow chart illustrating a sequence of actions of a heat medium temperature stabilization process by a refrigeration cycle system according to Embodiment 3. The process shown in Fig. 9 is executed in parallel with the process shown in Fig. 7 and the process shown in Fig. 8. To decrease instability of the refrigeration cycle system 100 entailed by an increase or decrease in the number of operating heat source apparatuses 1, that is, activation or stoppage of a heat source apparatus 1, the process shown in Fig. 9 is executed every time a third period of time determined in advance elapses. The third period of time is different in length from the first period of time and the second period of time. Note, however, that the third period of time may be the same in length as the first period of time or the second period of time.

In step S21, the integrated control device 3 determines whether the number of operating heat source apparatuses 1 is larger than or equal to 2. In a case in which the number of operating heat source apparatuses 1 is smaller than or equal to 1 (step S21: NO), the refrigeration cycle system 100 returns the process to step S21. In a case in which the number of operating heat source apparatuses 1 is larger than or equal to 2 (step S21: YES), the integrated control device 3 acquires flow rate information in step S22 from the flowmeters 17 provided in the operating heat source apparatuses 1. In step S23, the variation acquisition unit 31 or the instruction unit 32 of the integrated control device 3 determines, based on the flow rate information acquired in current and previous steps S22, whether the flow rates of the heat medium that flows through the heat medium heat exchangers 14 of the operating heat source apparatuses 1 have decreased. In a case in which there are no decreases in the flow rates of the heat medium that flows through the heat medium heat exchangers 14 of the operating heat source apparatuses 1 (step S23: NO), the refrigeration cycle system 100 returns the process to step S21. In a case in which the flow rates of the heat medium that flows through the heat medium heat exchangers 14 of the operating heat source apparatuses 1 have decreased (step S23: YES), the instruction unit 32 decreases the number of operating heat source apparatuses 1 in step S24. After processing of step S24, the refrigeration cycle system 100 returns the process to step S21.

In a case in which the integrated control device 3 determines in step S23 that the flow rates of the heat medium that flows through the heat medium heat exchangers 14 have increased, the integrated control device 3 may increase the number of operating heat source apparatuses 1 in step S23 before the process returns to step S21.

The following describes effects brought about by the refrigeration cycle system 100 according to Embodiment 3. In Embodiment 3, the controller acquires flow rate information from flow rate acquisition devices such as the flowmeters 17 of two or more operating heat source apparatuses 1. In a case in which the flow rate of the heat medium that flows through the heat medium heat exchanger 14 of each of the two or more heat source apparatuses 1 decreases, the controller decreases a number of the two or more heat source apparatuses. The decrease in the number of operating heat source apparatuses 1 causes an increase in the flow rate of the heat medium that flows through one heat medium heat exchanger 14. This stabilizes the temperature of the heat medium, and the refrigeration cycle system 100 can inhibit the heat source apparatus 1 from coming into a thermo-off state. Further, the refrigeration cycle system 100 can inhibit freezing of the heat medium heat exchanger 14.

### Embodiment 4.

A refrigeration cycle system 100 according to Embodiment 4 provides stabilization of the temperature of the heat medium by varying the operating frequency of the circulation device 15 in addition to the capacity of the compressor 10 according to the flow rate of the heat medium that flows through the heat medium heat exchanger 14. The following details the refrigeration cycle system 100 according to Embodiment 4. Constituent elements of Embodiment 4 that are similar to those of Embodiments 1 to 3 are given identical reference signs. Configurations of Embodiment 4 that are similar to those of Embodiments 1 to 3, functions of Embodiment 4 that are similar to those of Embodiments 1 to 3, or other features are not described below unless the circumstances are exceptional.

The integrated control device 3 of Embodiment 4 varies the operating frequency of the circulation device 15 of a heat source apparatus 1 based on the flow rate of the heat medium that flows through the heat medium heat exchanger 14 of the heat source apparatus 1. Specifically, in a case in which the flow rate of the heat medium that flows through the heat medium heat exchanger 14 has decreased during the first period of time, the instruction unit 32 increases the operating frequency of the circulation device 15. That is, in a case in which the flow rate of the heat medium that flows through the heat medium heat exchanger 14 has decreased during the first period of time, the instruction unit 32 instructs the heat source control device 16 of the heat source apparatus 1 to increase the operating frequency of the circulation device 15. Upon acquiring the instruction, the heat source control device 16 increases the operating frequency of the circulation device 15 and causes the circulation device 15 to operate at the operating frequency thus increased. The operating frequency of the circulation device 15 may be hereinafter referred to as "circulation frequency".

The instruction unit 32 may vary the circulation frequency based on a value of variation acquired by the variation acquisition unit 31. In this case, the storage unit 33 may store sixth correspondence information associating the value of variation and a circulation controlling value with each other. The circulation controlling value is a value that corresponds to the amount of change in circulation frequency effected by the instruction unit 32. It should be noted that the circulation controlling value may be a difference between the circulation frequency to be varied and the circulation frequency thus varied or may be the proportion of the difference to the circulation frequency to be varied. The instruction unit 32 varies the circulation frequency by the circulation controlling value associated by the sixth correspondence information with the value of variation acquired by the variation acquisition unit 31. Accordingly, in a case in which the flow rate of the heat medium that flows through the heat medium heat exchanger 14 has decreased, the circulation frequency rises according to the value of variation in the flow rate.

The sixth correspondence information may be information containing a mathematical expression representing a relationship between the value of variation and the circulation controlling value or may be information such as a table form associating the value of variation and the circulation controlling value with each other. A circulation controlling value in the sixth correspondence information is a value at which the flow rate and temperature of the heat medium are stabilized by varying the circulation frequency by the circulation controlling value in a case in which the value of variation in the flow rate of the heat medium that flows through the heat medium heat exchanger 14 has become a value of variation associated with the circulation controlling value. The sixth correspondence information is determined in advance according to the model, performance, or other attributes of the heat source apparatus 1, the results of experiments conducted in advance, the results of operation, or other conditions.

Apart from the aforementioned, the sixth correspondence information may be information containing a mathematical expression associating the flow rate of the heat medium that flows through the heat medium heat exchanger 14 and the circulation frequency with each other or may for example be table-form information associating the flow rate and the circulation frequency with each other. In the sixth correspondence information, a higher circulation frequency is associated with a lower flow rate. A value of the circulation frequency in the sixth correspondence information is for example a predetermined value at which the heat medium heat exchanger 14 does not become frozen or a predetermined value at which the heat source apparatus 1 does not come into a thermo-off state in a case in which the value of the flow rate of the heat medium that flows through the heat medium heat exchanger 14 has become a value of the flow rate associated with the value of the circulation frequency. The instruction unit 32 controls the circulation device 15 so that the circulation device 15 operates at the circulation frequency associated in the sixth correspondence information with a value of the flow rate acquired from the flowmeter 17 of the heat source apparatus 1.

Fig. 10 is a flow chart illustrating a sequence of actions of a circulation device control process by a refrigeration cycle system according to Embodiment 4. The process shown in Fig. 10 is executed in parallel with the process shown in Fig. 7. To facilitate understanding, Fig. 10 shows a process in a case in which the refrigeration cycle system 100 includes one heat source apparatus 1. A process in a case in which the refrigeration cycle system 100 includes a plurality of heat source apparatuses 1 is parallel processing of steps S31 to S33 for each heat source apparatus 1. The refrigeration cycle system 100 repeatedly executes processing of steps S31 to S33 in a cycle of the first period of time.

Processing of step S31 is similar to processing of the aforementioned step S1. The integrated control device 3 may perform processing of step S32 after performing processing of step S1 without performing processing of step S31. Processing of step S32 is similar to processing of the aforementioned step S3. The integrated control device 3 may perform processing of step S3 without performing processing of step S32. Moreover, in a case in which the integrated control device 3 has determined in step S3 that the flow rate has decreased, the integrated control device 3 may perform processing of step S33. In a case in which it has been determined in step S3 or S32 that there is no decrease in the flow rate, the refrigeration cycle system 100 returns the process to step S31.

In a case in which the flow rate of the heat medium that flows through the heat medium heat exchanger 14 has decreased (step S32: YES), the instruction unit 32 of the integrated control device 3 raises the circulation frequency in step S33. Then, the instruction unit 32 causes the circulation device 15 to operate at the circulation frequency thus raised. After processing of step S33, the refrigeration cycle system 100 returns the process to step S31.

The following describes effects brought about by the refrigeration cycle system 100 according to Embodiment 4. The refrigeration cycle system 100 according to Embodiment 4 further includes a circulation device 15 configured to cause the heat medium to flow through the heat medium heat exchanger 14. The controller varies an operating frequency of the circulation device 15 based on the flow rate information acquired from the flow acquisition device such as the flowmeter 17. Then, the controller causes the circulation device 15 to operate at the operating frequency thus varied. The refrigeration cycle system 100 can regulate the flow rate of the heat medium according to the flow rate of the refrigerant by varying the operating frequency of the circulation device 15 in addition to varying the capacity of the compressor 10 based on the flow rate information. Specifically, the refrigeration cycle system 100 cane both decrease the flow rate of the refrigerant that flows through the heat medium heat exchanger 14 and increase the flow rate of the heat medium, making it possible to provide stabilization of the temperature of the heat medium.

### Embodiment 5.

In Embodiment 5, the integrated control device 3 provides stabilization of the temperature of the heat medium by varying an opening degree of the after-mentioned bypass valve 8 according to the flow rate of the heat medium that passes through the heat medium heat exchanger 14. The following details a refrigeration cycle system 100 according to Embodiment 5. Constituent elements of Embodiment 5 that are similar to those of Embodiments 1 to 4 are given identical reference signs. Configurations of Embodiment 5 that are similar to those of Embodiments 1 to 4, functions of Embodiment 5 that are similar to those of Embodiments 1 to 4, or other features are not described below unless the circumstances are exceptional.

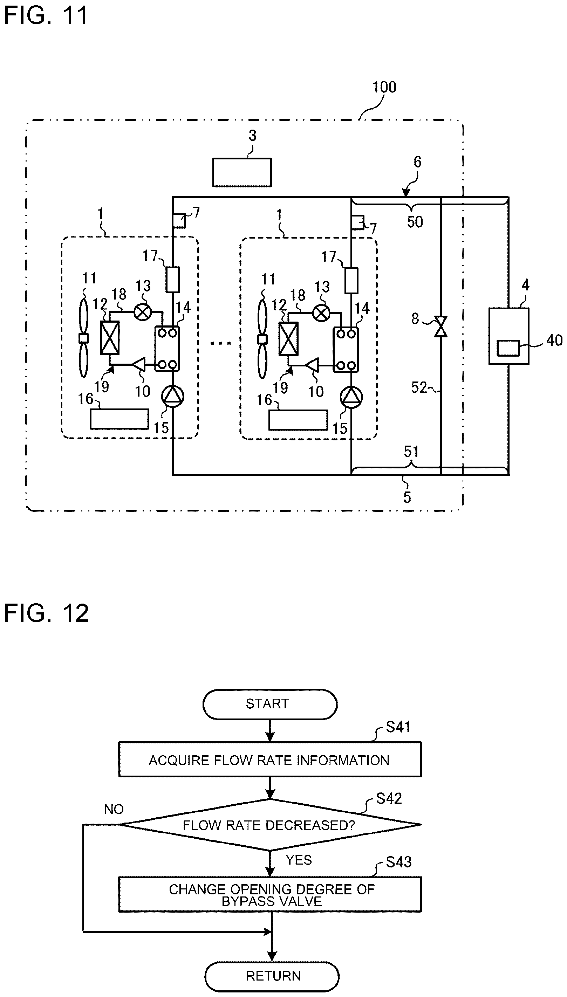

Fig. 11 is a schematic view showing an example configuration of a refrigeration cycle system according to Embodiment 5. In Embodiment 5, a heat source apparatuses shown in Fig. 11 may be replaced by a heat source apparatuses shown in Fig. 2 or 3. Alternatively, in Embodiment 5, a heat source apparatus 1 may include a plurality of refrigerant circuits 19 provided in series to heat medium pipes 5 as shown in Fig. 2 and a plurality of refrigerant circuits 19 provided in parallel to heat medium pipes 5 as shown in Fig. 3. In Embodiment 5, a heat medium circuit 6 is provided with a bypass pipe 52 connected in parallel to the load system 4 for one or more heat source apparatuses 1. The bypass pipe 52 is connected to an outbound pipe 50 and a return pipe 51. A portion of the heat medium flowing out from the one or more heat source apparatuses 1 flows into the bypass pipe 52. The bypass pipe 52 is provided with a bypass valve 8.

The bypass valve 8 regulates the flow rate of the heat medium that flows through the load system 4. The bypass valve 8 performs wire communication or wireless communication with the integrated control device 3 and varies its opening degree in accordance with a control signal received from the integrated control device 3. The change in the opening degree of the bypass valve 8 causes a change in the flow rate of the heat medium that passes through the bypass pipe 52. In a case in which the bypass valve 8 is not fully closed, a portion of the heat medium flowing out from the one or more heat source apparatuses 1 passes through the bypass pipe 52 and returns to the one or more heat source apparatuses 1. The bypass pipe 52 and the bypass valve 8 make it possible to adjust the flow rate of the heat medium to the load system 4.

In Embodiment 5, the integrated control device 3 varies the opening degree of the bypass valve 8 according to the flow rates of the heat medium that passes through the heat medium heat exchangers 14. Based on flow rate information acquired from flow rate acquisition devices such as the flowmeters 17 provided in the one or more heat source apparatuses 1, the integrated control device 3 transmits to the bypass valve 8 a control signal that instructs the bypass valve 8 to vary its opening degree. Note here that the integrated control device 3 may acquire a value of variation based on the flow rate information and vary the opening degree of the bypass valve 8 based on the value of variation. In this case, the storage unit 33 of the integrated control device 3 may store seventh correspondence information associating the value of variation and an opening-degree controlling value with each other, and the instruction unit 32 may vary the opening degree of the bypass valve 8 based on the seventh correspondence information. It should be noted that the opening-degree controlling value refers to the amount of the change in the opening degree of the bypass valve 8 effected by the instruction unit 32. The opening-degree controlling value may be a difference between the opening degree to be varied and the opening degree thus varied or may be the proportion of the difference to the opening degree to be varied. An opening-degree controlling value in the seventh correspondence information is such that the flow rate and temperature of the heat medium are stabilized by the opening degree of the bypass valve 8 varying by the opening-degree controlling value in a case in which the flow rates of the heat medium that flows through the heat medium heat exchangers 14 have fluctuated by a value of variation corresponding to the opening-degree controlling value. The opening-degree controlling value is determined in advance according to the model, performance, or other attributes of the one or more heat source apparatuses 1 or the bypass valve 8, or the results of experiments, the results of operation, or other conditions.

Apart from the aforementioned, the seventh correspondence information may be information such as a mathematical expression associating the flow rates of the heat medium that flows through the heat medium heat exchangers 14 and the opening degree of the bypass valve 8 with each other. A value of the opening degree of the bypass valve 8 in the seventh correspondence information is for example a predetermined value at which the heat medium heat exchangers 14 do not become frozen or a predetermined value at which a thermo-off state is brought about in a case in which the values of the flow rates of the heat medium that flows through the heat medium heat exchangers 14 have become a value of the flow rate corresponding to the value of the opening degree. The integrated control device 3 controls the opening degree of the bypass valve 8 so that it is an opening degree associated in the seventh correspondence information with flow rate information acquired from flow rate acquisition devices such as the flowmeters 17.

Fig. 12 is a flow chart illustrating a sequence of actions of a bypass valve control process by an integrated control device in Embodiment 5. The process of controlling the bypass valve 8 shown in Fig. 12 is executed in parallel with the processes shown in Figs. 7 to 10. The process of Fig. 12 is executed every first period of time. It should be noted that Fig. 12 shows the content of a process of regulating the opening degree of the bypass valve 8 in a case in which the flow rates of the heat medium that flows through the heat medium heat exchangers 14 of one or more heat source apparatuses 1 have decreased. The process of changing the opening degree of the bypass valve 8 shown in Fig. 12 is an example of a heat medium temperature stabilization process.

Processing of step S41 is similar to processing of the aforementioned step S1. The integrated control device 3 may perform processing of step S42 after performing processing of step S1 without performing processing of step S41. Processing of step S42 is similar to processing of step S3. The integrated control device 3 may perform processing of step S3 without performing processing of step S42. Moreover, in a case in which the integrated control device 3 has determined in step S3 that the flow rates of the heat medium that flows through the heat medium heat exchangers 14 have decreased, the integrated control device 3 may perform processing of step S43. In a case in which it has been determined in step S3 or S42 that there are no decreases in the flow rates of the heat medium, the refrigeration cycle system 100 returns the process to step S41.

In a case in which the flow rates of the heat medium that flows through the heat medium heat exchangers 14 have decreased (step S42: YES), the instruction unit 32 of the integrated control device 3 varies the opening degree of the bypass valve 8 in step S43. After processing of step S43, the refrigeration cycle system 100 returns the process to step S41.

The following describes effects brought about by the refrigeration cycle system 100 according to Embodiment 5. In Embodiment 5, the heat source apparatus 1 is connected to a load system 4 via a heat medium pipe 5 through which the heat medium flows. The load system 4 is configured to cool or heat a target through the heat medium. The heat source apparatus 1 forms a heat medium circuit 6 in combination with the load system 4. The heat medium circuit 6 is provided with a bypass pipe 52 connected in parallel to the load system 4. The bypass pipe 52 is provided with a bypass valve 8 configured to regulate a flow rate of the heat medium that flows through the load system 4. The controller varies an opening degree of the bypass valve 8 based on the flow rate of the heat medium that flows through the heat medium heat exchanger 14. The refrigeration cycle system 100 can regulate the flow rate of the heat medium according to the flow rate of the refrigerant by varying the opening degree of the bypass valve 8 in addition to varying the capacity of the compressor 10 based on the value of variation. Specifically, the refrigeration cycle system 100 can both decrease the flow rate of the refrigerant that flows through the heat medium heat exchanger 14 and increase the flow rate of the heat medium, making it possible to provide stabilization of the temperature of the heat medium.

### Embodiment 6.

In each of Embodiments 1 to 5, flow rate information is acquired by a flowmeter 17. In Embodiment 6, flow rate information is acquired by the after-mentioned differential pressure gauge 20 instated of a flowmeter 17. The following details a refrigeration cycle system 100 according to Embodiment 6. Constituent elements of Embodiment 6 that are similar to those of Embodiments 1 to 5 are given identical reference signs. Configurations of Embodiment 6 that are similar to those of Embodiments 1 to 5, functions of Embodiment 6 that are similar to those of Embodiments 1 to 5, or other features are not described below unless the circumstances are exceptional.

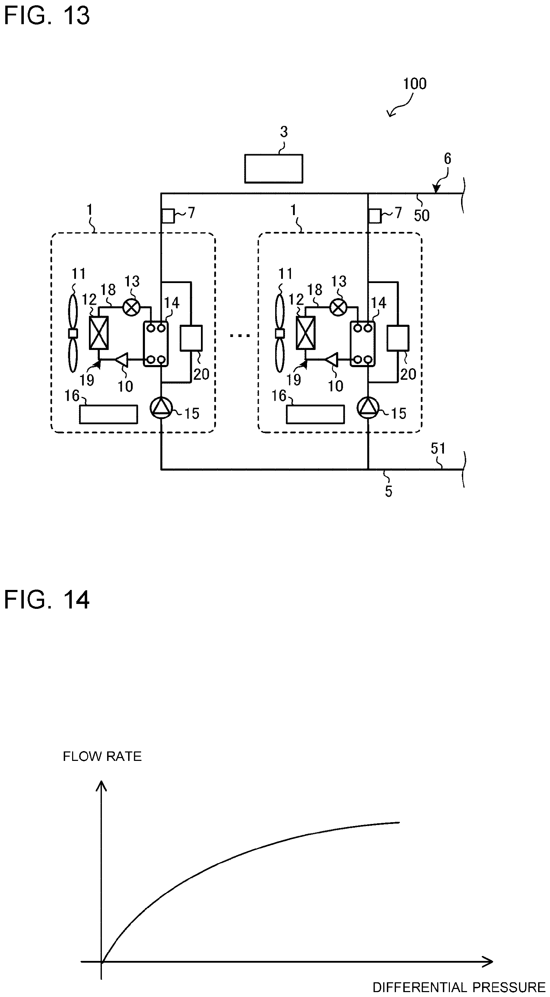

Fig. 13 is a schematic view showing an example configuration of a refrigeration cycle system in Embodiment 6. It should be noted that Fig. 13 omits to illustrate the load system 4 or a combination of the load system 4, the bypass pipe 52, and the bypass valve 8. In Embodiment 6, a heat source apparatus 1 includes a differential pressure gauge 20 instead of the aforementioned flowmeter 17. Although Fig. 13 shows an example in which the differential pressure gauge 20 is placed inside a housing constituting an outer shell of the heat source apparatus 1, the differential pressure gauge 20 may be provided outside the heat source apparatus 1. In Embodiment 6, a heat source apparatus 1 may be a heat source apparatus 1 shown in Fig. 2 or 3 instead of a heat source apparatus 1 shown in Fig. 13 with the flowmeter 17 replaced by a differential pressure gauge 20. Alternatively, in Embodiment 6, a heat source apparatus 1 may include a plurality of refrigerant circuits 19 provided in series to heat medium pipes 5 as shown in Fig. 2 and a plurality of refrigerant circuits 19 provided in parallel to heat medium pipes 5 as shown in Fig. 3 with the flowmeter 17 replaced by a differential pressure gauge 20.

The differential pressure gauge 20 is connected to heat medium pipes 5 situated upstream and downstream of a heat medium heat exchanger 14. Moreover, the differential pressure gauge 20 measures a differential pressure between the pressure of the heat medium in a heat medium pipe 5 situated upstream of a heat medium heat exchanger 14 and the pressure of the heat medium in a heat medium pipe 5 situated downstream of the heat medium heat exchanger 14. The differential pressure gauge 20 is an example of the aforementioned flow rate acquisition device. Further, a value of a differential pressure that is measured by the differential pressure gauge 20 is an example of the flow rate information.

In Embodiment 6, in a case in which a heat source apparatus 1 includes a plurality of heat medium heat exchangers 14 connected in series as shown in Fig. 2, the differential pressure gauge 20 is connected to heat medium pipes 5 situated upstream and downstream of any one of the plurality of heat medium heat exchangers 14. Alternatively, differential pressure gauges 20 may be connected to heat medium pipes 5 situated upstream and downstream of two or more heat medium heat exchangers 14. Differential pressure gauges 20 connected to heat medium pipes 5 situated upstream and downstream of two or more heat medium heat exchangers 14 measure differential pressures between the pressures of the heat medium in the heat medium pipes 5 situated upstream of the two or more heat medium heat exchangers 14 and the pressures of the heat medium in the heat medium pipes 5 situated downstream of the two or more heat medium heat exchangers 14.

The integrated control device 3 periodically acquires a value of the differential pressure as a measurement from the differential pressure gauge 20. It should be noted that the first period of time is a cycle of time in which the integrated control device 3 acquires a value of the differential pressure from the differential pressure gauge 20. The integrated control device 3 may acquire a value of the differential pressure from the differential pressure gauge 20 via the heat source control device 16.

Based on a value of the differential pressure obtained from the differential pressure gauge 20, the variation acquisition unit 31 of the integrated control device 3 acquires, by calculation or other processes, the flow rate of the heat medium that flows through a heat medium heat exchanger 14. The variation acquisition unit 31 acquires, based on differential pressure-flow rate information, the flow rate of the heat medium that flows through a heat medium heat exchanger 14. The differential pressure-flow rate information is information, such as a mathematical expression, that indicates a relationship between the flow rate of the heat medium that flows through a heat medium heat exchanger 14 and a differential pressure between the pressures of the heat medium upstream and downstream of the heat medium heat exchanger 14. The differential pressure-flow rate information may be table-form information that indicates a relationship between the flow rate of the heat medium that flows through a heat medium heat exchanger 14 and a differential pressure between the pressures of the heat medium upstream and downstream of the heat medium heat exchanger 14.

Fig. 14 is a diagram illustrating a graph of differential pressure-flow rate information in Embodiment 6. As shown in Fig. 14, the greater a differential pressure between the pressures of the heat medium upstream and downstream of a heat medium heat exchanger 14 is, the higher the flow rate of the heat medium that flows through the heat medium heat exchanger 14 is. The differential pressure-flow rate information allows the variation acquisition unit 31 to acquire, based on a value of the differential pressure acquired from the differential pressure gauge 20, the flow rate of the heat medium that flows through a heat medium heat exchanger 14.

The variation acquisition unit 31 acquires, based on values of the differential pressure periodically obtained from the differential pressure gauge 20, a value of variation in the flow rate of the heat medium that flows through a heat medium heat exchanger 14.

The configuration, functions, or other features of the instruction unit 32 to the number determination unit 35 in Embodiment 6 are similar to those of Embodiments 1 to 5. It should be noted that the storage unit 33 in Embodiment 6 stores differential pressure-flow rate information in addition to the first correspondence information that the storage units 33 in Embodiments 1 to 5 store.

It should be noted that the variation acquisition unit 31 may acquire a value of variation in the flow rate from a change in the differential pressure during the first period of time without converting the differential pressure into the flow rate. Apart from this, the instruction unit 32 may vary the total compressor frequency based on a value of the differential pressure varied during the first period of time. In this case, the first correspondence information may be information associating the amount of change in the differential pressure during the first period of time and the compressor controlling value with each other. It should be noted that the amount of change in the differential pressure during the first period of time indicated by the first correspondence information in this case may be a difference between the differential pressure before the first period of time and the differential pressure after the first period of time or may be the proportion of the difference to the differential pressure at the start of the first period of time. In a case in which the first correspondence information is information associating the amount of change in the differential pressure during the first period of time and the compressor controlling value with each other, the storage unit 33 does not need to store the differential pressure-flow rate information.

In the following, a heat medium temperature stabilization process by the refrigeration cycle system 100 according to Embodiment 6 is described. The temperature stabilization process of Embodiment 6 is illustrated by Fig. 7. It should be noted that the temperature stabilization process of Embodiment 6 is one in which the term "flowmeter 17" is read as "differential pressure gauge 20" and the flow rate information is a value of the differential pressure between the pressure of the heat medium upstream of a heat medium heat exchanger 14 and the pressure of the heat medium downstream of the heat medium heat exchanger 14 in the above description of Fig. 7.

In Embodiment 6, the processes shown in Figs. 8 to 10 and Fig. 12 may be executed. It should be noted that the process of Embodiment 6 illustrated by Fig. 9 is one in which the term "flowmeter 17" is read as "differential pressure gauge 20" in the above description of Fig. 9.

The following describes effects brought about by a refrigeration cycle system 100 of Embodiment 6. In Embodiment 6, the flow rate acquisition device is a differential pressure gauge 20 configured to measure a differential pressure that is a difference between a pressure of the heat medium that flows into the heat medium heat exchanger 14 and a pressure of the heat medium that flows out from the heat medium heat exchanger 14. The controller varies the operating capacity of the compressor 10 based on the differential pressure measured by the flow rate acquisition device during the first period of time. Then, the controller causes the compressor 10 to operate at the operating capacity thus varied. Although a flowmeter 17 is often large and expensive, a refrigeration cycle system 100 including a differential pressure gauge 20 instead of a flowmeter 17 can be smaller and less costly.

### Embodiment 7.

In each of Embodiments 1 to 5, the flow rate of the heat medium that flows through a heat medium heat exchanger 14 is measured by a flowmeter 17. In Embodiment 6, the flow rate of the heat medium that flows through a heat medium heat exchanger 14 is acquired from a sensing result yielded by a differential pressure gauge 20. In Embodiment 7, the after-mentioned first and second manometers 21 and 22 are constituent elements configured to acquire information regarding the flow rate of the heat medium. The following details a refrigeration cycle system 100 according to Embodiment 7. Constituent elements of Embodiment 7 that are similar to those of Embodiments 1 to 6 are given identical reference signs. Configurations of Embodiment 7 that are similar to those of Embodiments 1 to 6, functions of Embodiment 7 that are similar to those of Embodiments 1 to 6, or other features are not described below unless the circumstances are exceptional.

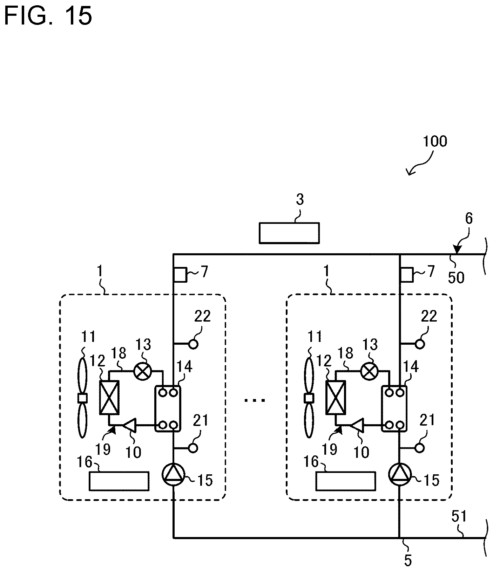

Fig. 15 is a schematic view showing an example configuration of a refrigeration cycle system in Embodiment 7. It should be noted that Fig. 15 omits to illustrate the load system 4 or a combination of the load system 4, the bypass pipe 52, and the bypass valve 8. In Embodiment 7, a heat source apparatus 1 includes a first manometer 21 and a second manometer 22 instead of the aforementioned flowmeter 17 or other components. Although Fig. 15 shows an example in which the first manometer 21 and the second manometer 22 are placed inside a housing constituting an outer shell of the heat source apparatus 1, both or either of the first and second manometers 21 and 22 may be provided outside the heat source apparatus 1. In Embodiment 7, a heat source apparatus 1 may be a heat source apparatus 1 shown in Fig. 2 or 3 instead of a heat source apparatus 1 shown in Fig. 15 with the flowmeter 17 replaced by a first manometer 21 and a second manometer 22. Alternatively, in Embodiment 7, a heat source apparatus 1 may include a plurality of refrigerant circuits 19 provided in series to heat medium pipes 5 as shown in Fig. 2 and a plurality of refrigerant circuits 19 provided in parallel to heat medium pipes 5 as shown in Fig. 3 with the flowmeter 17 replaced by a first manometer 21 and a second manometer 22.

The first manometer 21 is provided in a heat medium pipe 5 situated upstream of the heat medium heat exchanger 14 and measures the pressure of the heat medium upstream of the heat medium heat exchanger 14. The second manometer 22 is provided in a heat medium pipe 5 situated downstream of the heat medium heat exchanger 14 and measures the pressure of the heat medium downstream of the heat medium heat exchanger 14. A combination of the first manometer 21 and the second manometer 22 is an example of the aforementioned flow rate acquisition device. A value of the pressure measured separately by each of the first and second manometers 21 and 22 is an example of flow rate information.

In Embodiment 7, in a case in which a heat source apparatus 1 includes a plurality of heat medium heat exchangers 14 connected in series as shown in Fig. 2, the first manometer 21 is provided in a heat medium pipe 5 situated upstream of any one of the plurality of heat medium heat exchangers 14 of the heat source apparatus 1 and the second manometer 22 is provided in a heat medium pipe 5 situated downstream of the heat medium heat exchanger 14. Alternatively, first manometers 21 may provided in heat medium pipes 5 situated upstream of two or more heat medium heat exchangers 14, and second manometers 22 may be provided in heat medium pipes 5 situated downstream of the two or more heat medium heat exchangers 14. First manometers 21 provided in heat medium pipes 5 situated upstream of two or more heat medium heat exchangers 14 measure the pressures of the heat medium in the heat medium pipes 5 situated upstream of the two or more heat medium heat exchangers 14. Moreover, second manometers 22 provided in heat medium pipes 5 situated downstream of the two or more heat medium heat exchangers 14 measure the pressures of the heat medium in the heat medium pipes 5 situated downstream of the two or more heat medium heat exchangers 14.

The integrated control device 3 periodically acquires a value of the pressure as a measurement either directly or via the heat source control device 16 from the first manometer 21. In Embodiment 7, the first period of time is a cycle of time in which the integrated control device 3 acquires a value of the pressure from the first manometer 21. The integrated control device 3 periodically acquires a value of the pressure as a measurement either directly or via the heat source control device 16 from the second manometer 22. In Embodiment 7, the first period of time is a cycle of time in which the integrated control device 3 acquires a value of the pressure from the second manometer 22.

Based on the values of the pressure obtained from the first manometer 21 and the second manometer 22, the variation acquisition unit 31 of the integrated control device 3 acquires, by calculation or other processes, the flow rate of the heat medium that flows through the heat medium heat exchanger 14. The variation acquisition unit 31 calculates a difference between the value of the pressure obtained from the first manometer 21 and the value of the pressure obtained from the second manometer 22 and, based on the difference thus calculated, acquires the flow rate of the heat medium that flows through the heat medium heat exchanger 14. The difference is equivalent to the differential pressure in Embodiment 6.

According to the differential pressure, which is the difference between the value of the pressure obtained from the first manometer 21 and the value of the pressure obtained from the second manometer 22, the variation acquisition unit 31 acquires, based on the differential pressure-flow rate information in Embodiment 6, the flow rate of the heat medium that flows through the heat medium heat exchanger 14. Moreover, the variation acquisition unit 31 acquires, based on the values of the pressure periodically obtained from the first manometer 21 and the second manometer 22, a value of variation in the flow rate of the heat medium that flows through the heat medium heat exchanger 14.

Alternatively, without acquiring the flow rate from the differential pressure between the pressure obtained from the first manometer 21 and the pressure obtained from the second manometer 22, the variation acquisition unit 31 may acquire the value of variation in the flow rate from a change in the differential pressure during the first period of time. Apart from this, the instruction unit 32 may vary the total compressor frequency based on a value of the differential pressure varied during the first period of time.

In the following, a heat medium temperature stabilization process by the refrigeration cycle system 100 according to Embodiment 7 is described. The temperature stabilization process of Embodiment 7 is illustrated by Fig. 7. It should be noted that the temperature stabilization process of Embodiment 7 is one in which the term "flowmeter 17" is read as "combination of the first manometer 21 and the second manometer 22" in the above description of Fig. 7 and the flow rate information is a combination of the pressure of the heat medium upstream of the heat medium heat exchanger 14 and the pressure of the heat medium downstream of the heat medium heat exchanger 14.

In Embodiment 7, the processes shown in Figs. 8 to 10 and Fig. 12 may be executed. It should be noted that the process of Embodiment 7 illustrated by Fig. 9 is one in which the term "flowmeter 17" is read as "combination of the first manometer 21 and the second manometer 22" in the above description of Fig. 9.

The following describes effects brought about by a refrigeration cycle system 100 according to Embodiment 7. In Embodiment 7, the flow rate acquisition unit measures a pressure of the heat medium that flows into the heat medium heat exchanger 14 and a pressure of the heat medium that flows out from the heat medium heat exchanger 14. Specifically, the flow rate acquisition device is a combination of a first manometer 21 configured to measure the pressure of the heat medium that flows into the heat medium heat exchanger 14 and a second manometer 22 configured to measure the pressure of the heat medium that flows out from the heat medium heat exchanger 14. The controller varies the operating capacity of the compressor 10 based on the pressure of the heat medium that flows into the heat medium heat exchanger 14 and the pressure of the heat medium that flows out from the heat medium heat exchanger 14 measured by the flow rate acquisition device during the first period of time. Then, the controller causes the compressor 10 to operate at the operating capacity thus varied. This makes the refrigeration cycle system 100 smaller and less costly.

### Embodiment 8.

In Embodiment 8, flow rate information is acquired by the first manometer 21 of Embodiment 7 and the after-mentioned third manometer 23. The following details a refrigeration cycle system 100 according to Embodiment 8. Constituent elements of Embodiment 8 that are similar to those of Embodiments 1 to 7 are given identical reference signs. Configurations of Embodiment 8 that are similar to those of Embodiments 1 to 7, functions of Embodiment 8 that are similar to those of Embodiments 1 to 7, or other features are not described below unless the circumstances are exceptional.

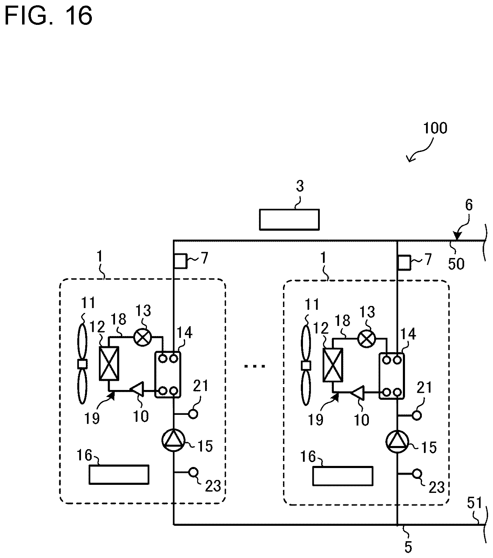

Fig. 16 is a schematic view showing an example configuration of a refrigeration cycle system according to Embodiment 8. It should be noted that Fig. 16 omits to illustrate the load system 4 or a combination of the load system 4, the bypass pipe 52, and the bypass valve 8. In Embodiment 8, a heat source apparatus 1 includes a third manometer 23 instead of a second manometer 22 in a heat source apparatus 1 of Embodiment 7. Embodiment 8 is described based on the assumption that the circulation device 15 is provided upstream of the heat medium heat exchanger 14. Although Fig. 16 shows an example in which the third manometer 23 is placed inside a housing constituting an outer shell of the heat source apparatus 1, the third manometer 23 may be provided outside the heat source apparatus 1.

In Embodiment 8, a heat source apparatus 1 may be a heat source apparatus 1 shown in Fig. 2 or 3 instead of a heat source apparatus 1 shown in Fig. 16 with the flowmeter 17 replaced by a first manometer 21 and a third manometer 23. Alternatively, in Embodiment 8, a heat source apparatus 1 may include a plurality of refrigerant circuits 19 provided in series to heat medium pipes 5 as shown in Fig. 2 and a plurality of refrigerant circuits 19 provided in parallel to heat medium pipes 5 as shown in Fig. 3 with the flowmeter 17 replaced by a first manometer 21 and a third manometer 23.

The third manometer 23 is provided in a heat medium pipe 5 situated upstream of the circulation device 15 and measures the pressure of the heat medium upstream of the circulation device 15. A combination of the first manometer 21 and the third manometer 23 is an example of the aforementioned flow rate acquisition device. A value of the pressure measured by each of the first and third manometers 21 and 23 is an example of flow rate information. In Embodiment 8, in a case in which a heat source apparatus 1 includes a plurality of heat medium heat exchangers 14 connected in series as shown in Fig. 2, the first manometer 21 is connected to a heat medium pipe 5 situated upstream of any one of the plurality of heat medium heat exchangers 14 of the heat source apparatus 1 and downstream of the circulation device 15 and the third manometer 23 is connected to a heat medium pipe 5 situated upstream of the circulation device 15.

Embodiment 8 is described based on the assumption that the circulation device 15 includes a pump and a driving device configured to drive the pump. Note here that the pump has a characteristic that defines a relationship between the total pump head and the discharge. The characteristic may be hereinafter referred to as "pump characteristic". According to the pump characteristic, the flow rate of the heat medium that is discharged from the circulation device 15 is obtained based on the total pump head. Note here that a differential pressure between the pressure measured by the first manometer 21 and the pressure measured by the third manometer 23 corresponds to the total pump head of the circulation device 15. For this reason, the flow rate of the heat medium that flows into the heat medium heat exchanger 14 is obtained based on measurements yielded by the first manometer 21 and the third manometer 23 and the pump characteristic.

The integrated control device 3 periodically acquires measurements from the first manometer 21 and the third manometer 23. The following description assumes that the first period of time is a cycle of time in which the integrated control device 3 acquires measurements from the first manometer 21 and the third manometer 23.

Based on the values of the pressure obtained from the first manometer 21 and the third manometer 23, the variation acquisition unit 31 of the integrated control device 3 acquires, by calculation or other processes, the flow rate of the heat medium that flows through the heat medium heat exchanger 14. The variation acquisition unit 31 calculates a difference between the value of the pressure obtained from the first manometer 21 and the value of the pressure obtained from the third manometer 23 and, based on the difference thus calculated and the pump characteristic, acquires the flow rate of the heat medium that flows through the heat medium heat exchanger 14.

The variation acquisition unit 31 acquires, based on the values of the pressure periodically obtained from the first manometer 21 and the third manometer 23, a value of variation in the flow rate of the heat medium that flows through the heat medium heat exchanger 14.

Alternatively, without acquiring the flow rate from the differential pressure between the pressure obtained from the first manometer 21 and the pressure obtained from the third manometer 23, the variation acquisition unit 31 may acquire the value of variation in the flow rate from a change in the differential pressure during the first period of time. Apart from this, the instruction unit 32 may vary the total compressor frequency based on a value of the differential pressure varied during the first period of time.

In the following, a heat medium temperature stabilization process by the refrigeration cycle system 100 according to Embodiment 8 is described. The temperature stabilization process of Embodiment 8 is illustrated by Fig. 7. It should be noted that the temperature stabilization process of Embodiment 8 is one in which the term "flowmeter 17" is read as "combination of the first manometer 21 and the third manometer 23" in the above description of Fig. 7 and the flow rate information is a combination of the pressure of the heat medium upstream of the circulation device 15 and the pressure of the heat medium downstream of the circulation device 15.

In Embodiment 8, the processes shown in Figs. 8 to 10 and Fig. 12 may be executed. It should be noted that the process of Embodiment 8 illustrated by Fig. 9 is one in which the term "flowmeter 17" is read as "combination of the first manometer 21 and the third manometer 23" in the above description of Fig. 9.

In Embodiment 8, flow rate information is acquired by the first manometer 21 and the third manometer 23 instead of the flowmeter 17. This makes the refrigeration cycle system 100 smaller and less costly.

### Embodiment 9.

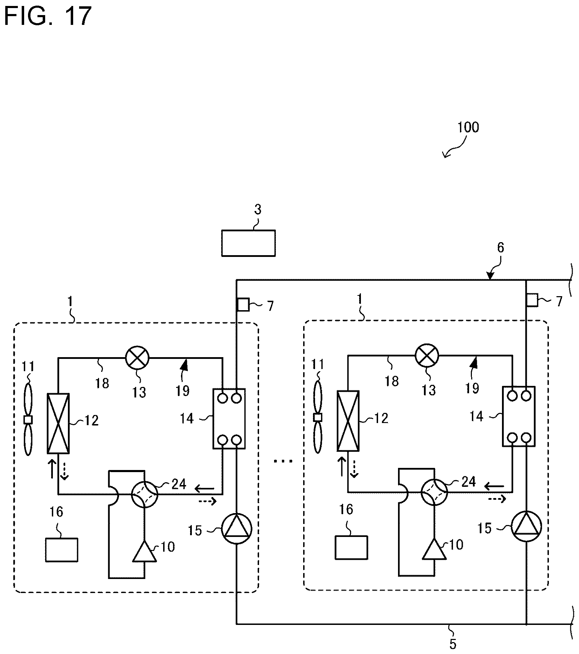

In each of Embodiments 1 to 8, the refrigeration cycle system 100 is configured to cool the heat medium. In Embodiment 9, a refrigeration cycle system 100 is configured to make it also possible to heat the heat medium. Fig. 17 is a schematic view showing an example configuration of a refrigeration cycle system according to Embodiment 9. It should be noted that Fig. 17 omits to illustrate a flow rate acquisition device. Further, Fig. 17 omits to illustrate the load system 4 or a combination of the load system 4, the bypass pipe 52, and the bypass valve 8.

Constituent elements of Embodiment 9 that are similar to those of Embodiments 1 to 8 are given identical reference signs. Configurations of Embodiment 9 that are similar to those of Embodiments 1 to 8, functions of Embodiment 9 that are similar to those of Embodiments 1 to 8, or other features are not described below unless the circumstances are exceptional.

As shown in Fig. 17, in Embodiment 9, a heat source apparatus 1 further includes a flow switching device 24. The flow switching device 24 includes, for example, a fourway valve and changes the direction of a flow passage of the refrigerant.

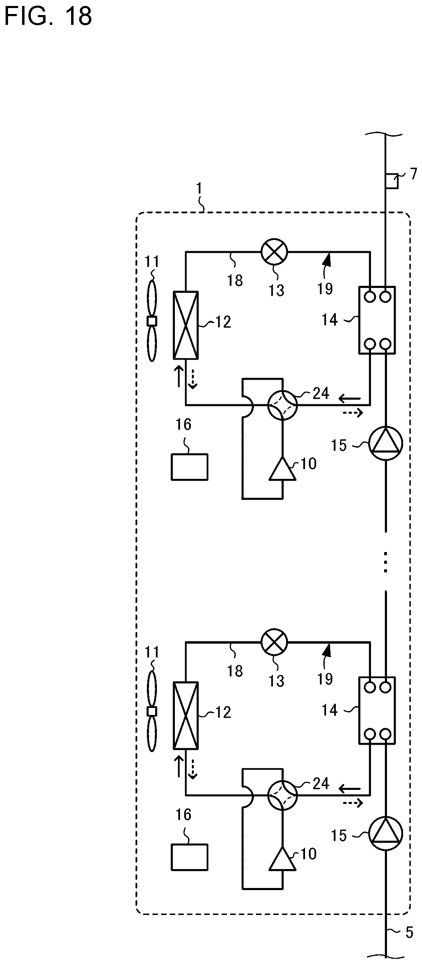

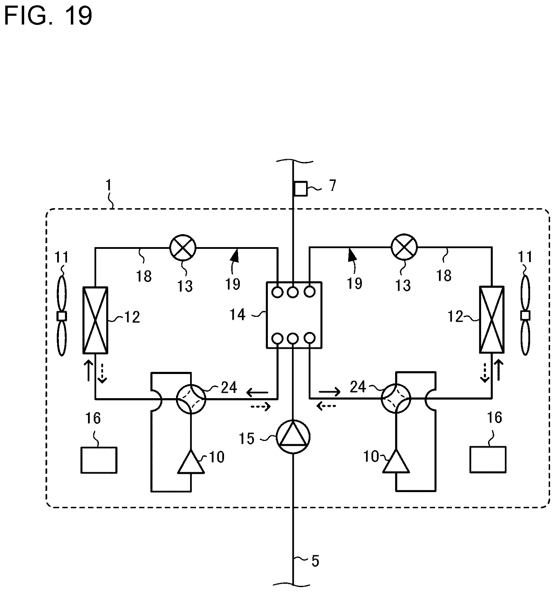

In Embodiment 9, a heat source apparatus 1 may be a heat source apparatus 1 including a plurality of refrigerant circuits 19 instead of a heat source apparatus 1 shown in Fig. 17. Fig. 18 is a diagram showing a first example configuration of a heat source apparatus including a plurality of refrigerant circuits in Embodiment 9. Fig. 19 is a diagram showing a second example configuration of a heat source apparatus including a plurality of refrigerant circuits in Embodiment 9. Fig. 18 shows a heat source apparatus 1 in which a plurality of refrigerant circuits 19 are provided in series to heat medium pipes 5, and Fig. 19 shows a heat source apparatus 1 in which a plurality of refrigerant circuits 19 are provided in parallel to heat medium pipes 5. It should be noted that Figs. 18 and 19 omit to illustrate flow rate acquisition devices. Although Fig. 19 shows a heat source apparatus 1 including two refrigerant circuits 19 provided in parallel to the heat medium pipes 5, the heat source apparatus 1 may include three or more refrigerant circuits 19 provided in parallel to the heat medium pipes 5.

As shown in each of Figs. 18 and 19, each of the plurality of refrigerant circuits 19 is provided with a compressor 10, a flow switching device 24, a heat exchanger 12, an expansion valve 13, and a heat medium heat exchanger 14 as in the case shown in Fig. 1. Further, the heat exchanger 12 in each of the plurality of refrigerant circuits 19 is provided with an air-sending device 11. The plurality of refrigerant circuits 19 are housed in a housing forming an outer shell of the heat source apparatus 1 indicated by dashed lines. Further, a heat source control device 16 too is housed in the housing. A temperature sensor 7 is provided in a heat medium pipe 5 to which the heat medium flows out from the heat source apparatus 1. Although each of Figs. 2 and 3 shows an example in which the temperature sensor 7 is provided outside the housing, the temperature sensor 7 may be provided inside the housing. Although each of Figs. 18 and 19 shows an example in which a circulation device 15 is provided inside the housing, the circulation device 15 may be provided outside the housing. The heat source control device 16 is placed in the housing.

A heat source apparatus 1 may be one including a plurality of refrigerant circuits 19 provided in series to heat medium pipes 5 as shown in Fig. 18 and a plurality of refrigerant circuits 19 provided in parallel to heat medium pipes 5 as shown in Fig. 19.

Solid lines in each of the flow switching devices 24 in Figs. 17 to 19 indicate flow passages of the refrigerant in a case in which the refrigeration cycle system 100 cools the target, that is, a case in which the heat source apparatus 1 cools the heat medium. Meanwhile, dashed lines in each of the flow switching devices 24 indicate flow passages of the refrigerant in a case in which the refrigeration cycle system 100 heats the target, that is, a case in which the heat source apparatus 1 heats the heat medium. In Fig. 17, a solid arrow indicates the direction in which the refrigerant flows when the target is cooled, and a dashed arrow indicates the direction in which the refrigerant flows when the target is heated.

When the target is heated, the high-temperature and high-pressure refrigerant discharged from the compressor 10 flows into the heat medium heat exchanger 14. In the heat medium heat exchanger 14, the heat medium exchanges heat with the high-temperature refrigerant and is heated. The high-temperature heat medium flowing out from the heat medium heat exchanger 14 flows into the load system 4 and heats the target.

Apart from the aforementioned, the heat source apparatus 1 may be configured to perform only heating operation. In this case, the refrigerant circuit 19 in the heat source apparatus 1 includes, instead of the flow switching device 24, refrigerant pipes 18 corresponding to the flow passages in each of the flow switching devices 24 indicated by dashed lines in Figs. 17 to 19.

The refrigeration cycle system 100 according to Embodiment 9 makes it possible to heat the target. Further, an excessive rise in the temperature of the heat medium in the heat medium heat exchanger 14 can be inhibited.

Although the heat exchangers 12 shown in Embodiments 1 to 9 are air-cooled heat exchangers configured to cause refrigerant and air to exchange heat with each other, the heat exchangers 12 may be water-cooled heat exchangers configured to cause refrigerant and liquid such as water to exchange heat with each other.

Embodiment 1 and Embodiments 6 to 9 have been described above by taking as an example a case in which the integrated control device 3 varies the total capacity of the compressors 10 of a heat source apparatus 1 based on flow rate information acquired by the flow rate acquisition device. However, instead of the integrated control device 3, the heat source control device 16 may vary the total capacity of the compressors 10 based on the flow rate information acquired by the flow rate acquisition device. **In** this case, the heat source control device 16 stores both or either the first correspondence information and/or the second correspondence information and varies the total capacity based on both or either the value of variation and/or the flow rate.

Embodiment 4 has been described above by taking as an example a case in which the integrated control device 3 varies the circulation frequency of the circulation device 15 of a heat source apparatus 1 based on flow rate information acquired by the flow acquisition device. However, instead of the integrated control device 3, the heat source control device 16 may vary the circulation frequency based on the flow rate information acquired by the flow rate acquisition device. **In** this case, the heat source control device 16 stores the sixth correspondence information and varies the circulation frequency based on the value of variation.

While the embodiments have been described above, the contents of the present disclosure are not limited to the embodiments but encompass a range of equivalents that are conceivable.

### Reference Signs List

1: heat source apparatus, 3: integrated control device, 4: load system, 5: heat medium pipe, 6: heat medium circuit, 7: temperature sensor, 8: bypass valve, 10: compressor, 11: air-sending device, 12: heat exchanger, 13: expansion valve, 14: heat medium heat exchanger, 15: circulation device, 16: heat source control device, 17: flowmeter, 18: refrigerant pipe, 19: refrigerant circuit, 20: differential pressure gauge, 21: first manometer, 22: second manometer, 23: third manometer, 24: flow switching device, 30: communication unit, 31: variation acquisition unit, 32: instruction unit, 33: storage unit, 34: compressor frequency acquisition unit, 35: number determination unit, 36: first bus, 37: first processor, 38: first memory, 39: first communication interface circuit, 40: load-side sensing device, 50: outbound pipe, 51: return pipe, 52: bypass pipe, 100: refrigeration cycle system, 160: second bus, 161: second processor, 162: second memory, 163: second communication interface circuit, 164: input interface circuit, 165: output interface circuit

## Claims

1. A refrigeration cycle system comprising:
a heat source apparatus having a refrigerant circuit, the heat source apparatus being configured to cool or heat a heat medium through refrigerant flowing through the refrigerant circuit; and
a controller configured to control the heat source apparatus,
wherein
the heat source apparatus includes
a heat medium heat exchanger configured to cause the heat medium and the refrigerant to exchange heat with each other,
a flow rate acquisition device configured to acquire flow rate information that is information regarding a flow rate of the heat medium that flows through the heat medium heat exchanger, and
a compressor configured to compress the refrigerant, and
the controller is configured to, in a case in which the flow rate of the heat medium that flows through the heat medium heat exchanger during a first period of time determined in advance, vary an operating capacity of the compressor, and cause the compressor to operate at the operating capacity thus varied.

2. The refrigeration cycle system of claim 1, wherein the controller is configured to, in a case in which the flow rate decreases during the first period of time, decrease the operating capacity and cause the compressor to operate at the operating capacity thus decreased.

3. The refrigeration cycle system of claim 1 or 2, wherein the controller is configured to vary the operating capacity based on a value of variation in the flow rate during the first period of time and causes the compressor to operate at the operating capacity thus varied.

4. The refrigeration cycle system of claim 3, wherein the controller is configured to, in a case in which a magnitude of the variation in the case in which the flow rate decreases is greater than or equal to a limit value determined in advance, change the operating capacity to a lower-limit capacity and cause the compressor to operate at the lower-limit capacity.

5. The refrigeration cycle system of any one of claims 1 to 4, wherein the controller is configured to, in a case in which the flow rate of the heat medium that flows through the heat medium heat exchanger is less than or equal to a first lower-limit value, change the operating capacity of the compressor to a lower-limit capacity and cause the compressor to operate at the lower-limit capacity.

6. The refrigeration cycle system of any one of claims 1 to 5, wherein
the flow rate acquisition device is configured to measure a differential pressure that is a difference between a pressure of the heat medium that flows into the heat medium heat exchanger and a pressure of the heat medium that flows out from the heat medium heat exchanger, and
the controller is configured to vary the operating capacity of the compressor based on the differential pressure measured by the flow rate acquisition device during the first period of time and cause the compressor to operate at the operating capacity thus varied.

7. The refrigeration cycle system of any one of claims 1 to 5, wherein
the flow rate acquisition device is configured to measure a pressure of the heat medium that flows into the heat medium heat exchanger and a pressure of the heat medium that flows out from the heat medium heat exchanger, and
the controller is configured to vary the operating capacity of the compressor based on the pressure of the heat medium that flows into the heat medium heat exchanger and the pressure of the heat medium that flows out from the heat medium heat exchanger measured by the flow rate acquisition device during the first period of time and causes the compressor to operate at the operating capacity thus varied.

8. The refrigeration cycle system of any one of claims 1 to 7, further comprising a circulation device configured to cause the heat medium to flow through the heat medium heat exchanger,
wherein the controller is configured to vary an operating frequency of the circulation device based on the flow rate information and cause the circulation device to operate at the operating frequency thus varied.

9. The refrigeration cycle system of any one of claims 1 to 8, wherein
the heat source apparatus is connected to a load system via a heat medium pipe through which the heat medium flows, the load system being configured to cool or heat a target through the heat medium,
the heat source apparatus forms a heat medium circuit in combination with the load system and the heat medium pipe,
the heat medium circuit is provided with a bypass pipe connected to the heat medium pipe in parallel to the load system,
the bypass pipe is provided with a bypass valve configured to regulate a flow rate of the heat medium that flows through the load system, and
the controller is configured to vary an opening degree of the bypass valve based on the flow rate information.

10. The refrigeration cycle system of any one of claims 1 to 9, further comprising a plurality of the heat source apparatuses.

11. The refrigeration cycle system of claim 10, wherein
the controller is configured to increase or decrease a number of operating heat source apparatuses based on an operating frequency of the compressor of an operating one of the plurality of heat source apparatuses,
the controller is configured to, in increasing the number of operating heat source apparatuses, decrease the operating capacity of the compressor of the operating heat source apparatus and cause the compressor to operate at the operating capacity thus decreased.

12. The refrigeration cycle system of claim 10 or 11, wherein the controller is configured to, in a case in which the plurality of heat source apparatuses include two or more operating heat source apparatuses and the flow rate of the heat medium that flows through the heat medium heat exchanger of each of the two or more operating heat source apparatuses decreases, decrease a number of the two or more operating heat source apparatuses based on the flow rate information acquired from the flow rate acquisition device of each of the two or more operating heat source apparatuses.
